# EUROPÄISCHE PATENTSCHRIFT

(11) **EP 2 720 888 B1**
(45) Veröffentlichungstag und Bekanntmachung des Hinweises auf die Patenterteilung: **16.12.2015**
(21) Anmeldenummer: 12712933.6
(22) Anmeldetag: 15.03.2012
(51) Int. Cl.: B60C 23/00

(54) **DRUCKSTEUEREINRICHTUNG FÜR EINE REIFENFÜLLANLAGE MIT DREHDURCHFÜHRUNG UND REIFENDRUCKÄNDERUNGSVERFAHREN**
PRESSURE CONTROL DEVICE FOR A TYRE INFLATING SYSTEM WITH A ROTARY FEEDTHROUGH, AND TYRE PRESSURE CHANGING METHOD
DISPOSITIF À COMMANDE PAR PRESSION POUR UNE INSTALLATION DE GONFLAGE DES PNEUS COMPRENANT UN PASSAGE ROTATIF ET PROCÉDÉ DE MODIFICATION DE LA PRESSION DES PNEUS

(30) Priorität: 18.06.2011 DE 102011104760
(43) Veröffentlichungstag der Anmeldung: 23.04.2014
(73) Patentinhaber: WABCO GmbH, 30453 Hannover (DE)
(72) Erfinder: BERNHARDT, Dirk, 31515 Wunstorf (DE); DIECKMANN, Thomas, 30982 Pattensen (DE); WIEHEN, Christian, 30938 Burgwedel (DE); ZIELKE, Frank, 30890 24 Barsinghausen (DE)
(74) Vertreter: Lauerwald, Jörg
(86) Internationale Anmeldenummer: PCT/EP2012/001151
(87) Internationale Veröffentlichungsnummer: WO 2012/175149

(56) Entgegenhaltungen:
- DE-C1- 19 950 191
- US-A- 4 804 027

## Beschreibung

Die Erfindung betrifft eine Drucksteuereinrichtung für eine Reifenfüllanlage eines Kraftfahrzeugs, insbesondere straßenbetriebenen Nutzfahrzeugs, wobei diese Reifenfüllanlage eine Drehdurchführung mit einem Stator und einem Rotor aufweist. Durch eine derartige Drehdurchführung wird Druckluft durch eine die Drehdurchführung aufweisende Radnabe zu einem an der Radnabe befestigten Rad geführt. Das Rad weist einen Reifen auf, der durch die Drehdurchführung und somit durch die Radnabe belüftet werden kann. Weiter betrifft die Erfindung eine Drehdurchführung, eine Reifenfüllanlage und ein Kraftfahrzeug, welches die Reifenfüllanlage aufweist. Schließlich betrifft die Erfindung ein Reifendruckänderungsverfahren, bei dem wenigstens ein Reifen mittels einer Reifenfüllanlage belüftet wird.

Reifenfüllanlagen an Kraftfahrzeugen ermöglichen es, den Reifendruck von Reifen an Rädern des Kraftfahrzeugs ausgehend vom Kraftfahrzeug auch während der Fahrt zu verändern. Dadurch kann der Reifendruck, insbesondere auch während der Fahrt, derart an einen jeweiligen Straßenbelag und/oder an einen jeweiligen Beladungszustand des Kraftfahrzeugs angepasst werden, dass der Rollwiderstand der Reifen, der Verschleiß der Reifen und die zum Antrieb des Kraftfahrzeugs notwendige Antriebsenergie minimiert werden. Dadurch erhöht sich die Nutzungsdauer der Reifen und verringert sich der Kraftstoffverbrauch des Kraftfahrzeugs. Insgesamt senkt die Nutzung einer Reifenfüllanlage somit die Betriebskosten für ein damit ausgestattetes Kraftfahrzeug.

Aus DE 199 50 191 C1 ist eine Reifendruckregelanlage bzw. Reifenfüllanlage bekannt, bei der eine, zwei oder auch mehrere Leitungen durch die Drehdurchführung in der Radnabe geführt werden können. Die Drehdurchführung dieser bekannten Reifenfüllanlage weist zumindest eine durch einen statorseitig und durch einen rotorseitig konzentrisch zur Drehachse des Rades angeordneten Ringkörper begrenzte Kammer auf, wobei diese Kammer insbesondere eine Ringkammer ist.

Der statorseitige Ringkörper bzw. Stator und der rotorseitige Ringkörper bzw. Rotor sind durch einen Bewegungsspalt voneinander beabstandet. Wenn Druckluft vom Stator zum Rotor und somit zum Rad übertragen werden soll, muss der Bewegungsspalt beiderseits der Kammer abgedichtet werden. Dies erfolgt mittels Dichtungen bzw. Dichtringen, die pneumatisch aktivierbar bzw. über eine Steuerleitung steuerbar sind. Wenn der Druck im Reifen geändert werden soll, wird zunächst die Dichtung über die Steuerleitung aktiviert. Dann wird in einem zweiten Schritt der Druck im Reifen über die Drehdurchführung geändert. Nach Entlüftung der Kammer durch die Drehdurchführung muss die Steuerleitung entlüftet werden, um die Dichtung wieder zu deaktivieren, so dass es zu keinem unnötigen Verschleiß dieser Dichtung durch Reibung des sich gegenüber dem Stator und auch gegenüber der Dichtung drehenden Rotors an dieser Dichtung kommt.

Nachteilig an der bekannten Reifendruckregelanlage gemäß DE 199 50 191 C1 ist, dass das neben der durch die Drehdurchführung geführten Leitung eine zusätzliche Steuerleitung zur Nabe bzw. zur Drehdurchführung geführt ist, für die zum Schalten der Dichtung ein zusätzlicher Steuerdruck ausgesteuert werden muss. Ein derartiges Aussteuern und Bereitstellen eines Drucks erfolgt in der Regel aufwendig mittels elektromagnetisch steuerbarer Ventile.

Aus DE 10 2007 027 147 A1 ist eine Drehdurchführung für ein unter Druck durchführbares Medium bekannt, bei der dieses Medium, insbesondere Druckluft, ebenfalls von einem Stator zu einem Rotor übertragen wird, wobei eine Dichtung mittels des Drucks der durch die Drehdurchführung durchzuführenden Druckluft vom Stator, einen Spalt überbrückend, gegen den Rotor gedrückt wird. Somit liegt die Dichtung bei Durchführung der Druckluft durch die Drehdurchführung am Rotor an, wohingegen diese Dichtung bei Nichtdurchführung der Druckluft freiliegt. Allerdings kann Druckluft durch den Spalt zwischen dem Stator und dem Rotor entweichen, wenn der Druck dieser Druckluft nicht ausreicht, einen Kolben so stark gegen die Dichtung zu pressen, dass sich diese Dichtung verformt und sich an den Rotor anlegt. Dies dürfte insbesondere jeweils für einen kurzen Zeitraum beim Druckaufbau und beim Druckabbau der Fall sein.

Aus US 4 804 027 A ist eine Drehdurchführung mit integriertem Ventil bekannt, welches den Übertragungspfad verzögert gegenüber der Aktivierung der Dichtung freigibt.

Der Erfindung liegt nach alledem die Aufgabe zugrunde, ausgehend von der Reifenfüllanlage gemäß DE 199 50 191 C1 eine verbesserte und zugleich vereinfachte Vorrichtung und ein Verfahren zum Ändern des Reifendrucks, insbesondere für Nutzfahrzeuge, die überwiegend auf Straßen im Einsatz sind, bereitzustellen.

Die Erfindung löst diese Aufgabe mit einer Drucksteuereinrichtung nach Anspruch 1, mit einer Drehdurchführung nach Anspruch 6, mit einer Reifenfüllanlage nach Anspruch 7, mit einem Kraftfahrzeug nach Anspruch 10 sowie mit einem Reifendruckänderungsverfahren nach Anspruch 11.

Die Drucksteuereinrichtung weist einen Belüftungseingang auf, der mit einer Druckversorgungseinrichtung bzw. zentralen Ventileinheit des Kraftfahrzeugs verbunden sein kann. Die Druckversorgungseinrichtung kann Druckluft mit einem beispielsweise mittels Elektromagnetventilen ausgesteuerten Druck bereitstellen. Weiter weist die Drucksteuereinrichtung einen Belüftungsausgang auf, durch den Druckluft über die Drehdurchführung vom Stator zum Rotor geführt werden kann. Die erfindungsgemäße Drucksteuereinrichtung kann somit der Druckversorgungseinrichtung des Kraftfahrzeugs und der Drehdurchführung durch die Radnabe zwischengeschaltet sein. Über den Belüftungseingang empfängt die Drucksteuereinrichtung Druckluft mit einem Belüftungseingangsdruck. Über den Belüftungsausgang und weiter über die Drehdurchführung belüftet die Drucksteuereinrichtung den Reifen mit einem Belüftungsausgangsdruck.

Darüber hinaus stellt die Drucksteuereinrichtung jedoch auch einen Dichtungssteuerdruck an einem Dichtungssteuerausgang bereit, wobei die Drucksteuereinrichtung über diesen Dichtungssteuerausgang wenigstens eine Dichtung mittels Druckluft, die den Dichtungssteuerdruck aufweist, aktiviert und dadurch eine zwischen dem Stator und dem Rotor angeordnete Luftkammer abdichtet. Das Belüften des Dichtungssteuerausgangs erfolgt ebenfalls mit über den Belüftungseingang zugeführter Druckluft. Insbesondere weist die Drucksteuereinrichtung keinen weiteren Belüftungseingang, insbesondere keinen separaten Steuereingang zur Steuerung des Dichtungssteuerdrucks, auf.

Weiter weist die Drucksteuereinrichtung ein pneumatisch mittels eines Schaltdrucks schaltbares Schaltventil auf, wobei der Belüftungsausgang nur dann mittels dieses Schaltventils mit dem Belüftungsausgangsdruck belüftet wird, wenn der Schaltdruck wenigstens so hoch wie ein definierter Mindestschaltdruck ist. Wenn hingegen der Schaltdruck niedriger ist als der Mindestschaltdruck, nimmt das Schaltventil eine Sperrstellung ein, in welcher der Belüftungsausgang gegen eine Belüftung vom Belüftungseingang abgesperrt ist.

Die Drucksteuereinrichtung ist derart ausgebildet, dass im Falle einer Belüftung des Belüftungseingangs auch der Dichtungssteuerausgang und ein Schalteingang des Schaltventils belüftet werden. Wenn der Belüftungseingang bzw. die Drucksteuereinrichtung mit dem Belüftungseingang, dem Belüftungsausgang und dem Dichtungssteuerausgang entlüftet ist und der Druck im Reifen geändert werden soll, muss der Belüftungsausgang belüftet werden. Hierfür wird der Belüftungseingang, insbesondere mittels der Druckversorgungseinrichtung, belüftet.

Die Drucksteuereinrichtung ist derart ausgebildet bzw. weist eine Druckluftführung bzw. eine Anordnung von Druckkanälen und Druckräumen derart auf, dass in Erwiderung auf einen Aufbau des Belüftungseingangsdrucks am zuvor entlüfteten Belüftungseingang zum Belüften des Belüftungsausgangs sowohl ein Druckaufbau des Schaltdrucks als auch des Dichtungssteuerdrucks erfolgt. Der Schaltdruck sorgt für das Aktivieren der Dichtung. Der Dichtungssteuerdruck schaltet das Schaltventil, wenn der Schaltdruck den Mindestschaltdruck erreicht.

Insbesondere erfolgt der Aufbau des Belüftungseingangsdrucks dabei mit einem zeitlichen Druckgradienten, der wenigstens so groß ist wie ein definierter Mindestdruckgradient. Die Druckluftführung ist weiter derart, dass dabei der Druckaufbau des Schaltdrucks auf den Mindestschaltdruck gegenüber dem Druckaufbau des Dichtungssteuerdrucks auf diesen Mindestschaltdruck verzögert erfolgt. Dadurch erreicht die Erfindung, dass in Erwiderung auf eine Druckluftbereitstellung am Belüftungseingang zunächst die Dichtung aktiviert wird und erst zeitverzögert, wenn nämlich die Dichtung die Luftkammer zwischen dem Stator und dem Rotor mit ausreichender Kraft abdichtet, das Schaltventil schaltet, so dass nachfolgend Druckluft in die Luftkammer zwischen dem Stator und dem Rotor und somit durch die Drehdurchführung zum Reifen geleitet wird. Dadurch liegt die Dichtung bereits mit ausreichend hohem Druck am Rotor an, wenn der die Luftkammer aufweisende Druckkanal durch die Drehdurchführung mittels des Schaltventils freigeschaltet wird.

Nach dem Freischalten bzw. in der Durchgangsstellung des Schaltventils wird sofort zügig Druckluft durch die Drehdurchführung zum Reifen geführt. Dadurch ist bereits ein zügiges Belüften zum Belüftungsausgang möglich, auch wenn der Belüftungseingangsdruck nicht oder noch nicht einen maximal möglichen Wert für einen Belüftungseingangsdruck erreicht.

Die Drucksteuereinrichtung ist in einer vorteilhaften Ausgestaltung der Erfindung eine Einheit mit einem Gehäuse, das mit Anschlüssen, nämlich dem Belüftungseingang, dem Belüftungsausgang und dem Dichtungssteuerausgang, versehen ist. Vorzugsweise weist dieses Gehäuse keine weiteren Anschlüsse auf. Insbesondere umfasst die Drucksteuereinrichtung lediglich pneumatische, jedoch keine elektropneumatischen, Komponenten. Auch weitere elektrische Einrichtungen sind vorzugsweise nicht von der Drucksteuereinrichtung umfasst, so dass die Drucksteuereinrichtung beispielsweise als ein Block ausgebildet sein kann, der zugleich das Gehäuse bildet, und in den Bohrungen als Druckkanäle zur Druckluftführung sowie bewegliche Komponenten als Ventile bzw. Teile von Ventilen eingebracht sind.

In einer vorteilhaften Ausführungsform weist die Drucksteuereinrichtung eine Querschnittsverengung, insbesondere Drossel, und eine der Querschnittsverengung nachgeschaltete und mit einem Schalteingang des Schaltventils verbundene Luftkammer auf, welche gemeinsam den Druckaufbau des Schaltdrucks verzögern. Insbesondere wird der Druckaufbau des Schaltdrucks gegenüber dem Druckaufbau des Dichtungssteuerdrucks verzögert. Dadurch wird erreicht, dass das Schaltventil erst von seiner Sperrstellung in seine Durchgangsstellung schaltet und damit Druckluft durch die Drehdurchführung führt, wenn die Dichtung aktiviert bzw. angelegt ist.

Die Querschnittsverengung ist eine Luftdurchführung, die beispielsweise als Bohrung realisiert sein kann, wobei diese die Querschnittsverengung bereitstellende Bohrung gegenüber Bohrungen, welche Druckluft zum Dichtungssteuerausgang leiten, einen geringeren Querschnitt aufweist, so dass pro Zeiteinheit weniger Druckluft durch die Querschnittsverengung zum Schalteingang des Schaltventils als zum Dichtungssteuerausgang geleitet werden kann. Darüber hinaus sorgt die Luftkammer dafür, dass eine größere Luftmenge die Querschnittsverengung passieren muss, bis sich der Mindestschaltdruck aufbaut.

Das Schaltventil weist vorzugsweise eine Feder auf und nimmt durch die Kraft der Feder die Sperrstellung ein, wenn der Schaltdruck geringer ist als der Mindestschaltdruck. Die Durchgangsstellung wird vom Schaltdruck gegen die Kraft der Feder erreicht. Vorzugsweise ist das Schaltventil ein 2/2-Wegeventil, das lediglich die Sperrstellung und die Durchgangsstellung einnehmen kann.

Gemäß einer vorteilhaften Ausführungsform weist die Drucksteuereinrichtung ein Rückschlagventil auf, über das der Belüftungsausgang zum Belüftungseingang entlüftet wird. Dadurch ist ein Entlüften des Belüftungsausgangs über dieses Rückschlagventil in einer Entlüftungsrichtung möglich, insbesondere in dem Fall, dass das Rückschlagventil geschlossen ist bzw. der Schaltventileingang unter den Mindestschaltdruck entlüftet ist. Dadurch kann beim Entlüften ein ggf. noch vorhandener Restdruck am Belüftungsausgang abgebaut werden, auch wenn das Schaltventil sich bereits in Sperrstellung befinden sollte. Das in einer Sperrstellung befindliche Rückschlagventil sperrt hingegen in entgegensetzter Richtung bzw. in Belüftungsrichtung. Das Belüften des Belüftungsausgangs bzw. eine Druckerhöhung am Belüftungsausgang ist daher vorzugsweise lediglich über das Schaltventil möglich, so dass das Belüften erst bei angelegter Dichtung erfolgt.

In einer vorteilhaften Ausführungsform weist die Drucksteuereinrichtung ein weiteres Rückschlagventil sowie eine querschnittsreduzierte Verbindung bzw. Drossel auf. Über dieses weitere Rückschlagventil wird der Dichtungssteuerausgang belüftet. In Entlüftungsrichtung sperrt hingegen das weitere Rückschlagventil. Das Entlüften des Dichtungssteuerausgangs erfolgt über die querschnittsreduzierte Verbindung bzw. Drossel. Der Dichtungssteuerausgang wird somit über das weitere Rückschlagventil maximal mit einem ersten Volumenstrom belüftet und über die querschnittsreduzierte Verbindung bzw. Drossel maximal mit einem, gegenüber dem ersten Volumenstrom verminderten, zweiten Volumenstrom entlüftet. Dadurch wird ein schnelles Anlegen der Dichtung, jedoch ein demgegenüber langsames Lösen der Dichtung erreicht. Folglich wird die Dichtung zwar eher aktiviert als das Schaltventil geschaltet wird. Jedoch wird die Dichtung nur zögerlich deaktiviert, wohingegen der Belüftungsausgang demgegenüber schnell entlüftet wird, so dass der Belüftungsausgang entlüftet ist, bevor die Dichtung deaktiviert ist.

In einer bevorzugten Ausführungsform der Erfindung sind das weitere Rückschlagventil und die querschnittsreduzierte Verbindung bzw. Drossel zusammen als Drosselrückschlag ausgebildet, wobei die Drossel in das Rückschlagventil integriert ist. Insbesondere ist die Drossel durch eine Bohrung in einem Ventilkolben des Drosselrückschlags realisiert.

Gemäß einer speziellen Ausführungsform der Erfindung weist die Drucksteuereinrichtung Druckuntersetzungsmittel auf, die dem Belüftungsausgang vorgeschaltet sind. Die Druckuntersetzungsmittel stellen Druckluft am Belüftungsausgang mit einem Belüftungsausgangsdruck bereit, der gegenüber dem Belüftungseingangsdruck am Belüftungseingang reduziert ist. Insbesondere ist der Belüftungsausgangsdruck in einem vorgegebenen Untersetzungsverhältnis gegenüber dem Belüftungseingangsdruck reduziert. Dadurch wird sichergestellt, dass beim Belüften bzw. Entlüften die Dichtung immer mit einem ausreichend starken Druck angelegt ist, auch wenn mit einem vergleichsweise niedrigen Druck belüftet werden soll.

In einer Weiterbildung der Erfindung ist die Drucksteuereinrichtung in die Drehdurchführung integriert. Die Drehdurchführung weist somit den Stator, den Rotor und die Drucksteuereinrichtung auf. An die Radnabe mit der Drehdurchführung braucht daher lediglich eine Druckluftleitung für das Anlegen der Dichtung und für das Belüften bzw. Entlüften des Reifens sowie ggf. für das Steuern dieses Belüftens bzw. Entlüftens am Rad an die Radnabe bzw. an die Drehdurchführung herangeführt werden. Insbesondere führt dies zu kurzen Leitungswegen von der Drucksteuereinrichtung zur Dichtung und zur Leitung, die durch die Drehdurchführung hindurchgeführt wird.

In einer alternativen Ausführungsform ist die Drucksteuereinrichtung hingegen abseits der Drehdurchführung bzw. abseits der Nabe am Kraftfahrzeug angeordnet.

Die erfindungsgemäße Reifenfüllanlage ist für ein Kraftfahrzeug vorgesehen, das den zusammen mit dem Rotor drehbaren Reifen aufweist. Die Reifenfüllanlage weist die Drehdurchführung mit dem Stator und dem Rotor auf. Ferner weist die Reifenfüllanlage die Drucksteuereinrichtung auf, die entweder separat von der Drehdurchführung angeordnet ist oder in die Drehdurchführung integriert ist.

Die Reifenfüllanlage weist vorzugsweise ein Radventil bzw. Reifendrucksteuerungsventil auf, das an einem den Reifen aufweisenden Rad angeordnet bzw. mit dem Rotor verbunden ist, so dass es zusammen mit dem Rotor und dem Reifen rotieren kann. Das Radventil steuert das Belüften und Entlüften des Reifens und somit den Reifendruck, indem es zumindest zum Belüften, vorzugsweise jedoch auch zum Entlüften, einen Druckluftweg vom Belüftungsausgang der Drucksteuereinrichtung zum Reifen freischaltet und anderenfalls unterbricht und somit die Luft im Reifen hält, wenn der Reifendruck nicht geändert werden soll.

Gemäß einer Ausführungsform der Erfindung ist dem Radventil und dem Reifen ein Reifenfüllventil zwischengeschaltet, das eine Verbindung des Radventils zum Reifen dauerhaft geöffnet hält. Vorzugsweise ist eine vom Reifenfüllventil zum Radventil führende Druckluftleitung derart am Reifenfüllventil angeschraubt, dass das Reifenfüllventil gegen ein Einnehmen seiner Sperrstellung sichert. In einer alternativen Ausführungsform entfällt das Reifenfüllventil.

Das Radventil ist vorzugsweise derart ausgebildet und angeordnet, dass es pneumatisch von seinem am Radventileingang anliegenden Radventileingangsdruck gesteuert wird. Der Radventileingang ist dabei mit der Drehdurchführung verbunden, wohingegen ein Radventilausgang zum Reifen bzw. zum dem Reifen vorgeschalteten Reifenfüllventil führt. Daher braucht keine zusätzliche Steuerleitung durch die Radnabe bzw. durch die Drehdurchführung geführt werden. Die Drehdurchführung ist somit vorzugsweise als Einkanaldrehdurchführung ausgebildet, die lediglich eine Luftkammer zwischen dem Stator und dem Rotor aufweist, die beiderseits von jeweils einer Dichtung abgedichtet werden kann.

Um die Funktionen Belüften, Entlüften und Druckhalten mittels des Radventils durchzuführen, ist der Steueranschluss des Radventils mit dem Radventileingang verbunden, wobei das Radventil gemäß einer bevorzugten Ausführungsform eine Durchgangsstellung einnimmt, wenn der Druck am Radventileingang mindestens so hoch ist wie ein definierter Mindestdruck und eine Sperrstellung einnimmt, wenn der Druck am Radventileingang niedriger ist als dieser oder einer anderer Mindestdruck. Der Mindestdruck beträgt beispielsweise 1 Bar. Zum Ändern des Reifendrucks auf einen Wert, der wenigstens so groß ist wie der Mindestdruck, wird daher dieser neue Reifendruck am Belüftungsausgang der Drucksteuereinrichtung und damit auch am Radventileingang bereitgestellt. Das Radventil öffnet daraufhin, so dass sich der Reifendruck ebenfalls auf den Belüftungsausgangsdruck einstellt. Wenn der gewünschte Druck erreicht ist, entlüftet die Drucksteuereinrichtung den Belüftungsausgang schnell zum Belüftungseingang, so dass der Druck am Radventileingang und somit auch der Druck am Steueranschluss des Radventils unter den Mindestdruck sinkt und das Radventil in seine Sperrstellung schaltet, so dass nachfolgend der eingestellte Druck im Reifen gehalten wird.

Das Radventil ist vorzugsweise als 2/2-Wegeventil ausgebildet, das lediglich eine Schaltstellung zum Verbinden des Radventileingangs mit dem Radventilausgang und eine Schaltstellung zum Sperren des Radventilausgangs gegen den Radventileingang aufweist. Dabei nimmt das Radventil bei einem Steuerdruck, der unterhalb des Mindestdrucks liegt, durch die Kraft einer Feder die Sperrstellung ein.

Gemäß einer bevorzugten Ausführungsform der Erfindung ist der Radventilausgang gedrosselt ausgeführt bzw. ist dem Radventilausgang eine Querschnittsverengung bzw. Drossel zur Begrenzung des Volumenstroms zwischen dem Radventilausgang und dem Reifen bzw. Reifenfüllventil nachgeschaltet. Dadurch wird erreicht, dass der Druck am Radventileingang und somit auch am Steueranschluss des Radventils bei einer Entlüftung des Belüftungsausgangs der Drucksteuereinrichtung schnell unter den Mindestdruck fällt und somit eine Sperrung des Radventils bewirkt, obwohl Druckluft vom Reifen zum Radventil nachströmt. Das Nachströmen dieser Druckluft ist aufgrund des gedrosselten Radventilausgangs begrenzt, so dass sich der Druck im Reifen nur unwesentlich verringert, wenn der Belüftungsausgang entlüftet wird, bevor das Radventil schließt.

In einer vorteilhaften Weiterbildung ist die Drehdurchführung mit einem Radlager, welches das den Reifen aufweisende Rad trägt, konstruktiv zu einer Einheit zusammengefasst. Auf diese Weise ist eine platzsparende und kostengünstige Anordnung der Drehdurchführung ermöglicht. Alternativ oder zusätzlich ist die Drehdurchführung in einer vorteilhaften Weiterbildung der Erfindung mit einer ABS (Antiblockiersystem)-Geschwindigkeitssensorik, die diesem Rad zugeordnet ist, konstruktiv zu einer Einheit zusammengefasst. Auch hierbei ergeben sich Vorteile hinsichtlich einer platzsparenden und kostengünstigen Anordnung der Drehdurchführung.

Weitere Ausführungsformen der Erfindung ergeben sich aus den Ansprüchen sowie aus den anhand der Zeichnung näher erläuterten Ausführungsbeispielen. In der Zeichnung zeigen:
- Fig. 1: einen Teil eines Rades eines Kraftfahrzeugs in einer Schnittdarstellung mit einer Reifenfüllanlage mit Drucksteuereinrichtung und Drehdurchführung;
- Fig. 2: ein Schaltbild der Drucksteuereinrichtung des Ausführungsbeispiels von Fig. 1 mit einem Drosselrückschlag;
- Fig. 3: eine Schnittdarstellung des Drosselrückschlags von Fig. 2 bei geschlossenem Ventil;
- Fig. 4: eine Schnittdarstellung des Drosselrückschlags der Fig. 2 und 3 bei geöffnetem Ventil;
- Fig. 5: eine Vorderansicht vom Ventilsitz des Drosselrückschlags gemäß den Figuren 2 bis 4;
- Fig. 6: eine erste Schnittdarstellung der Drucksteuereinrichtung gemäß den Fig. 1 und 2;
- Fig. 7: eine zweite Schnittdarstellung der Drucksteuereinrichtung gemäß den Fig. 1 und 2;
- Fig. 8: eine dritte Schnittdarstellung der Drucksteuereinrichtung gemäß den Fig. 1 und 2;
- Fig. 9: eine vergrößerte Darstellung von Teilen der Darstellung aus Fig. 1 mit der Drehdurchführung und der Drucksteuereinrichtung;
- Fig. 10: die in Fig. 9 dargestellten Teile mit gegenüber der Darstellung von Fig. 9 anderer Anordnung der Drucksteuereinrichtung;
- Fig. 11: ein Schaltbild des Radventils in der Druckluftanlage gemäß Fig. 1;
- Fig. 12: eine erste Schnittdarstellung des Radventils gemäß Fig. 11;
- Fig. 13: eine zweite Schnittdarstellung des Radventils gemäß Fig. 11;
- Fig. 14: eine schematische Darstellung des erfindungsgemäßen Reifendruckänderungsverfahrens.

Gleiche Bezugszeichen in den Figuren bezeichnen gleiche oder zumindest ähnliche bzw. funktionsgleiche Teile.

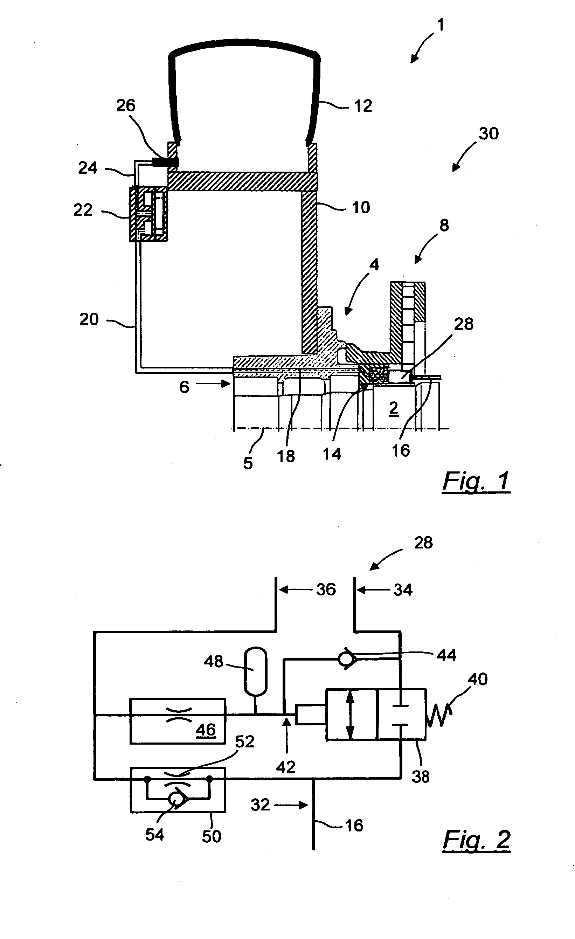

Fig. 1 zeigt Teile eines Rades 1 eines Kraftfahrzeugs, wobei das Rad 1 auf einer Achse 2 mittels einer Nabe 4 drehbar um eine gestrichelt dargestellte Drehachse 5 gelagert ist. Die Nabe 4 umfasst hierfür ein Radlager 6. Ferner ist an der Nabe 4 eine Bremseinrichtung 8, beispielsweise eine Scheibenbremse, angeordnet.

Das Rad 1 weist eine Felge 10 und einen Reifen 12 auf. Die Felge 10 ist beispielsweise mittels mehrerer nicht dargestellter Schrauben an der Nabe 4 befestigt. Der Reifen 12 wird von der Felge 10 getragen.

In die Nabe 4 ist eine Drehdurchführung 14 zur Verbindung eines Druckluftkanals 16 mit einem Druckluftkanal 18 integriert. Der Druckluftkanal 16 ist an einer abseits des Rades 1 angeordneten und nicht dargestellten zentralen Ventileinheit angeschlossen, über die Druckluft mit einem ausgesteuerten Druck bezogen oder auch der Druckluftkanal 16 entlüftet werden kann.

Der Druckluftkanal 18 ist in Reihe über einen Druckluftkanal 20, ein als Reifendrucksteuerungsventil ausgebildetes Radventil 22, einen Druckluftkanal 24 und ein Reifenfüllventil 26 mit dem Reifen 12 bzw. mit der Druckluft im Reifen 12 verbunden bzw. verbindbar. Das Reifenfüllventil 26 nimmt eine Durchgangsstellung ein. Insbesondere kann der Druck im Reifen 12 durch Änderung des Drucks im Druckluftkanal 16 erhöht oder abgesenkt werden. Die Druckluftkanäle 18 und 20 sind dabei sowohl Arbeitskanäle, welche Druckluft zum Reifen 12 führen bzw. Druckluft vom Reifen 12 wegführen, als auch Steuerkanäle für das Radventil 22. Daher ist es ausreichend, dass die Drehdurchführung 14 einkanalig ausgebildet ist.

Der Drehdurchführung 14 ist eine erfindungsgemäße Drucksteuereinrichtung 28 vorgeschaltet, die in Abhängigkeit vom Druck im Druckluftkanal 16 entweder eine Verbindung vom Druckluftkanal 16 zur Drehdurchführung 14 und somit zum Druckluftkanal 18 sperrt oder eine Belüftung oder Entlüftung des Druckluftkanals 18 durch die Drehdurchführung 14 und die Drucksteuereinrichtung 28 freischaltet. Weiter steuert die Drucksteuereinrichtung 28 Dichtungen zum Abdichten der Drehdurchführung 14 ebenfalls in Abhängigkeit vom Druck im Druckluftkanal 16. Der Druckluftkanal 16 hat somit die Funktion einer Arbeitsleitung und zusätzlich die Funktion einer Steuerleitung für die Drucksteuereinrichtung 28 sowie für das Radventil 22.

Mithin werden drei Funktionen über den Druckluftkanal 16 realisiert, der als einziger Druckluftkanal zur Nabe 4 geführt sein muss. Dadurch ermöglicht die Erfindung eine technisch einfache und kostengünstige Druckregelung des Reifendrucks im Reifen 12. Damit wird eine Reifenfüllanlage 30 mit der Drucksteuereinrichtung 28, mit der Drehdurchführung 14, mit dem Radventil 22, mit dem Reifenfüllventil 26 und mit den Druckluftkanälen 16, 18, 20 und 24 bereitgestellt, welche insbesondere für Nutzfahrzeuge, die überwiegend auf Straßen im Einsatz sind, optimiert ist. Dabei ist die einfache Ausgestaltung mit einer einkanaligen Ausbildung der Drehdurchführung 14 und mit dem einkanaligen Anschluss über den Druckluftkanal 16 insbesondere deshalb möglich, da zum einen der Luftdruck im Reifen 12 nicht unter ein Bar Überdruck gegenüber der Atmosphäre abgesenkt werden muss und somit ein ausreichender Überdruck zum pneumatischen Schalten im Radventil 22 und in der Drucksteuereinrichtung 28 bereitgestellt werden kann. Zum anderen muss der Reifendruck bei Straßenfahrzeugen lediglich in einem kleinen Druckintervall, insbesondere von weniger als 2 Bar, vorzugsweise weniger als 1 Bar, geändert werden.

Fig. 2 zeigt ein Schaltbild der Drucksteuereinrichtung 28 des Ausführungsbeispiels von Fig. 1. Die Drucksteuereinrichtung 28 weist einen Belüftungseingang 32 auf, der mit dem Druckluftkanal 16 verbunden ist. Weiter weist die Drucksteuereinrichtung 28 einen Belüftungsausgang 34 und einen Dichtungssteuerausgang 36 auf. Der Belüftungsausgang 34 kann derart an die Drehdurchführung 14 angeschlossen sein, dass er durch den Kanal der Drehdurchführung 14 mit dem Druckluftkanal 18 verbunden werden kann. Der Dichtungssteuerausgang 36 kann hingegen derart mit der Drehdurchführung 14 verbunden sein, dass mittels eines am Dichtungssteuerausgang bereitgestellten Dichtungssteuerausgangsdrucks die Verbindung zwischen dem Belüftungsausgang 34 und dem Druckluftkanal 18 in der Drehdurchführung 14 abgedichtet werden kann. Hierzu werden Dichtungen mittels des Dichtungssteuerausgangsdrucks betätigt.

Die Drucksteuereinrichtung 28 weist pneumatisch steuerbare Komponenten auf. Insbesondere weist die Drucksteuereinrichtung 28 ein Schaltventil 38 auf, das als ein gegen die Kraft einer Feder 40 mittels eines Schaltdruckes an einem Schalteingang 42 schaltbares 2/2-Wegeventil ausgebildet ist. In seiner Ruhestellung sperrt das Schaltventil 38 den Belüftungsausgang 34 gegen den Belüftungseingang 32 ab. Ab einem Mindestdruck am Schalteingang 42 schaltet das Schaltventil 38 gegen die Kraft der Feder 40 in seine Durchgangsstellung, in der der Belüftungseingang 32 und der Belüftungsausgang 34 über das Schaltventil 38 pneumatisch miteinander verbunden sind. Ein Entlüften des Belüftungsausgangs 34 zum Belüftungseingang 32, insbesondere in der Sperrstellung des Schaltventils 38, ist über ein Rückschlagventil 44 möglich.

Der Schalteingang 42 des Schaltventils 38 ist über eine Drossel 46 mit dem Belüftungseingang 32 verbunden. Zwischen der Drossel 46 und dem Schalteingang 42 ist ein Druckbehälter 48 angeordnet, der die notwendige Luftmenge erhöht, die durch die Drossel 46 strömen muss, damit sich der Schaltdruck am Schalteingang 42 ändert. Die Drossel 46 und der Druckbehälter 48 bewirken somit in Kombination, dass sich in Erwiderung auf eine Druckänderung am Belüftungseingang 32 ein dort vorliegender Belüftungseingangsdruck erst verzögert am Schalteingang 42 als Schaltdruck einstellt. Dies hat den Zweck, den Belüftungsausgang 34 erst dann zu belüften, wenn genügend Zeit zum Anlegen der Dichtungen in der Drehdurchführung 14 verstrichen ist.

Die Dichtungen werden vergleichsweise schnell aktiviert bzw. angelegt, da der Belüftungseingang 32 und der Dichtungssteuerausgang 36 mittels eines Drosselrückschlags 50 miteinander verbunden sind, wobei der Dichtungssteuerausgang 36 nicht nur über eine Drossel 52 im Drosselrückschlag 50, sondern in erster Linie über ein weiteres Rückschlagventil 54 im Drosselrückschlag 50 belüftet werden kann. Ein Entlüften des Dichtungssteuerausgangs 36 über den Drosselrückschlag 50 erfolgt hingegen lediglich über die Drossel 52, da das Rückschlagventil 54 in Entlüftungsrichtung sperrt. Dadurch werden die Dichtungen in der Drehdurchführung 14 erst verzögert bzw. allmählich deaktiviert, insbesondere im Verhältnis zum Entlüften des Belüftungsausgangs 34 zum Belüftungseingang 32.

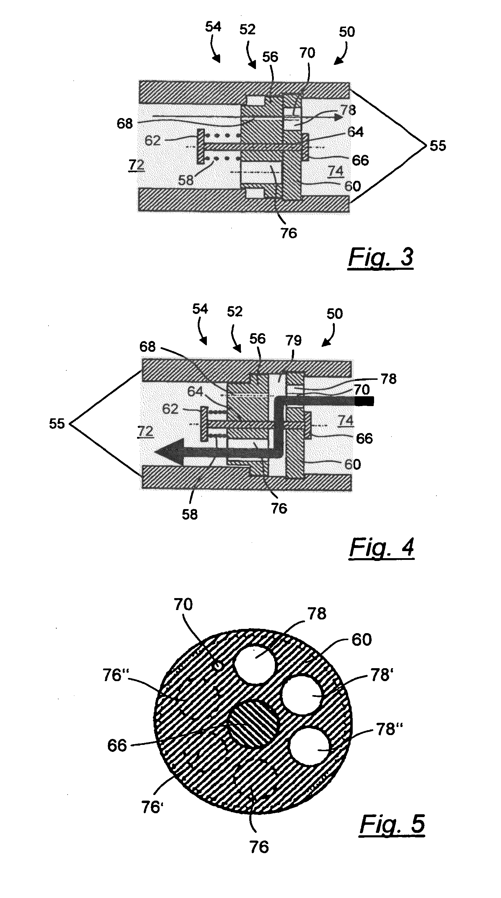

Fig. 3 zeigt eine konstruktive Schnittdarstellung des Drosselrückschlags 50 gemäß Fig. 2 bei geschlossenem Ventil. Der Drosselrückschlag 50 weist ein Gehäuse 55 bzw. einen Ventilblock auf, in dem ein Absperrkörper 56 mit der Kraft einer Feder 58 gegen einen Ventilsitz 60 gedrückt wird. Dieses Gehäuse 55 bzw. dieser Ventilblock kann ein gemeinsames Gehäuse oder ein gemeinsamer Ventilblock für mehrere oder alle Teile der Drucksteuereinrichtung 28 und in einer besonderen Ausführungsform Teil des Radlagers 6 sein. Die Feder 58 drückt gegen ein Widerlager 62, das mittels einer Stange 64 und eines Widerlagers 66 relativ zum Ventilsitz 60 fixiert ist. Der Absperrkörper 56 und der Ventilsitz 60 weisen zueinander korrespondierende Bohrungen 68 und 70 als Drossel 52 auf. Insbesondere kann durch die Bohrungen 68 und 70 bzw. durch die Drossel 52 unabhängig von der Position des Absperrkörpers 56 Druckluft in Entlüftungsrichtung von einer Ausströmseite 72 zu einer Einströmseite 74 des Drosselrückschlags 50 strömen.

Sowohl der Absperrkörper 56 als auch der Ventilsitz 60 weisen jeweils wenigstens eine Bohrung 76 bzw. 78 mit einem gegenüber der Bohrung 68 bzw. 70 vergrößerten Querschnitt auf. Im Gegensatz zu den Bohrungen 68 und 70 sind die Bohrungen 76 und 78 jedoch nicht korrespondierend zueinander angeordnet. Im geschlossenen Zustand des Rückschlagventils 54 bzw. bei Anliegen des Absperrkörpers 56 am Ventilsitz 60 sind die Bohrungen 76 und 78 daher gegeneinander abgesperrt, so dass keine Luft durch die Bohrungen 76 und 78 von der Ausströmseite 72 zur Einströmseite 74 des Drosselrückschlags 50 strömen kann.

Fig. 4 zeigt eine Schnittdarstellung des Drosselrückschlags 50 der Figuren 2 und 3 bei geöffnetem Rückschlagventil 54. Diese geöffnete Stellung wird erreicht, wenn ein Überdruck auf der Einströmseite 74 gegenüber der Ausströmseite 72 so groß ist, dass durch die Bohrung 78 strömende Druckluft den Absperrkörper 56 gegen die Kraft der Feder 58 axial verschiebt und dadurch einen Druckraum 79 öffnet, der die Bohrungen 76 und 78 miteinander verbindet, so dass Druckluft von der Einströmseite 74 durch die Bohrung 78, durch den Druckraum 79 und durch die Bohrung 76 zur Ausströmseite 72 des Drosselrückschlags 50 strömen kann. Sobald sich ein Druckgleichgewicht zwischen den Seiten 72 und 74 des Drosselrückschlags 50 eingestellt hat, schließt die Feder 58 wieder das Rückschlagventil 54, so dass die in Fig. 3 dargestellte Anordnung erreicht wird.

Fig. 5 zeigt den Ventilsitz 60 zusammen mit dem mittig davor angeordneten Widerlager 66 in einer Ansicht in Belüftungsrichtung bzw. von der Einströmseite 74 in Richtung zur Ausströmseite 72 des Drosselrückschlags 50. Der Ventilsitz 60 weist neben der Bohrung 78 zwei weitere, zur Bohrung 78 gleichartige, Bohrungen 78' und 78" auf. Durch diese Bohrungen 78, 78' und 78" ist der Absperrkörper 56 sichtbar. Dieser Absperrkörper 56 weist, wie strichpunktiert dargestellt, die Bohrung 76 sowie weitere zur Bohrung 76 gleichartige Bohrungen 76' und 76" auf, die alle versetzt zu jeder der Bohrungen 78, 78' und 78" im Ventilsitz 60 angeordnet sind, so dass bei Anliegen des Absperrkörpers 56 an den Ventilsitz 60 keine Luft durch die Bohrungen 76, 76', 76", 78, 78' und 78" strömt.

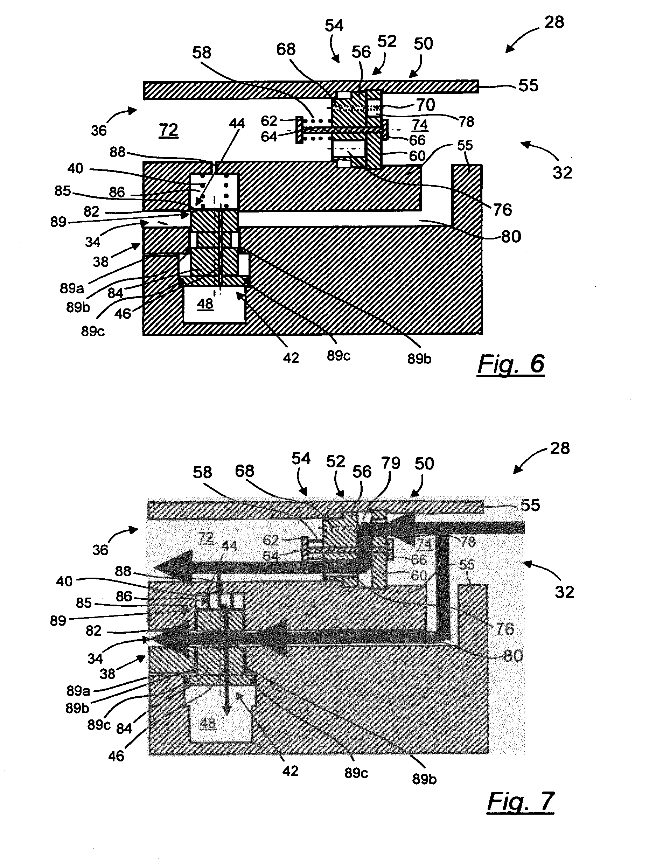

Fig. 6 zeigt eine erste Schnittdarstellung der Drucksteuereinrichtung 28 gemäß den Fig. 1 und 2. Die Drucksteuereinrichtung 28 weist den Drosselrückschlag 50 gemäß Fig. 2 in einer konstruktiven Ausgestaltung gemäß den Figuren 3, 4 und 5 auf, wobei Fig. 6 die geschlossene Stellung des Rückschlagventils 54 gemäß Fig. 3 zeigt. Auf der Einströmseite 74 des Drosselrückschlags 50 zweigt eine somit mit dem Belüftungseingang 32 verbundene Druckluftleitung 80 ab, die zum Schaltventil 38 führt, das im dargestellten sperrenden Zustand die Druckluftleitung 80 von einer mit dem Belüftungsausgang 34 verbundenen Druckluftleitung 82 trennt. Insbesondere trennt ein Absperrkörper 84 die Druckluftleitung 82 von der Druckluftleitung 80. Dabei wird dieser Absperrkörper 84 durch die Kraft der Feder 40 über eine zwischen der Feder 40 und dem Absperrkörper 84 angeordnete Dichtscheibe 85 oder Trennscheibe, insbesondere Gummischeibe, in seiner Position gehalten.

Das Rückschlagventil 44, die Drossel 46 und der Druckbehälter 48 sind baulich in die Ausgestaltung des Schaltventils 38 integriert. Dabei ist die Drossel 46 durch eine Bohrung im Absperrkörper 84 realisiert, welche den Druckbehälter 48 mit einer Kammer 86 verbindet, in der die Feder 40 angeordnet ist. Die Kammer 86 steht wiederum über eine Bohrung 88 mit der Ausströmseite 72 des Drosselrückschlags 50 bzw. mit dem Dichtungssteuerausgang 36 in Verbindung.

Das Rückschlagventil 44 ist durch eine Nut 89 im Absperrkörper 84 und die Dichtscheibe 85 realisiert. Durch die Nut 89 kann Druckluft vom Dichtungssteuerausgang 36 zur Dichtscheibe 85 strömen und die Dichtscheibe 85 derart gegen die Kraft der Feder 40 drücken, dass die Druckluft durch einen Spalt zwischen dem Absperrkörper 84 und der Dichtscheibe 85 sowie weiter durch eine Öffnung in der Dichtscheibe 85 zur Kammer 86 entweichen kann.

Ein Druckausgleich, um das Schaltventil 38 schalten zu können, ist durch eine Bohrung 89a gegeben, wobei die Druckluftleitung 80 und der Druckbehälter 48 mittels Dichtringen 89b und 89c gegen diese Bohrung 89a abgesperrt sind. Die Bohrung 89 verbindet dabei einen von den Dichtringen 89b und 89c begrenzten Bereich des Schaltventils 38, in dem sich ein Teil des Absperrkörpers 56 bewegt, mit der Umgebung bzw. mit der Atmosphäre und ist folglich mit Atmosphärenluftdruck beaufschlagt.

Abweichend von der Darstellung gemäß Fig. 6 kann anstelle der Bohrung 88, welche letztendlich den Schalteingang 42 des Schaltventils 38 mit dem Dichtungssteuerausgang 36 verbindet, eine alternative Bohrung bzw. Druckluftleitung zwischen der Kammer 86 und der Einströmseite 74 des Drosselrückschlags 50 bzw. der Druckluftleitung 80 bzw. dem Belüftungseingang 32 vorgesehen sein.

Fig. 7 zeigt die Drucksteuereinrichtung 28 beim Druckaufbau. Im Unterschied zur Darstellung gemäß Fig. 6 sind sowohl das Rückschlagventil 54 im Drosselrückschlag 50 als auch das Schaltventil 38 jeweils in geöffneter Stellung bzw. Durchgangsstellung dargestellt. Diese Ventilstellungen werden eingenommen, wenn der Belüftungseingang 32 und der Dichtungssteuerausgang 36 belüftet sind, wobei der Druck im Druckraum 79 zumindest so groß sein muss, dass das Rückschlagventil 54 gegen die Kraft der Feder 58 und den Druck von der Ausströmseite 72 des Drosselrückschlags 50 in seiner geöffneten Stellung gehalten wird. Der Schaltdruck im Druckbehälter 48 und somit am Schalteingang 42 des Schaltventils 38 ist mindestens so groß wie der zum Schalten des Schaltventils 38 benötigte Mindestschaltdruck, so dass das Schaltventil 38 seine geöffnete Stellung einnimmt. In dieser Schaltstellung ist auch der Belüftungsausgang 34 belüftet.

Wenn der Druck im Reifen geändert werden soll, wird am Belüftungseingang 32 Druckluft bereitgestellt, die sich gemäß dargestellten Pfeilen ausbreitet. Insbesondere öffnet sich zunächst das Rückschlagventil 54 im Drosselrückschlag 50, so dass der Dichtungssteuerausgang 36 schnell belüftet wird und ein Anlegen von Dichtungen in der Drehdurchführung 14 erfolgen kann. Druckluft strömt zudem zögerlich durch die Bohrung 88 in die Kammer 86 und weiter durch die Bohrung bzw. durch die Drossel 46 in die Kammer bzw. den Druckbehälter 48. Im Druckbehälter 48 erhöht sich der Druck als Schaltdruck für das Schaltventil 38 nur langsam im Vergleich zum Dichtungssteuerausgangsdruck am Dichtungssteuerausgang 36. Wenn der Schaltdruck jedoch einen Mindestschaltdruck erreicht hat, schaltet das Schaltventil 38 jedoch gegen die Kraft der Feder 40 in seine Durchgangsstellung, so dass der Belüftungsausgang 34 über das Schaltventil 38 belüftet wird und nachfolgend der Druck im Reifen 12 erhöht oder abgesenkt werden kann.

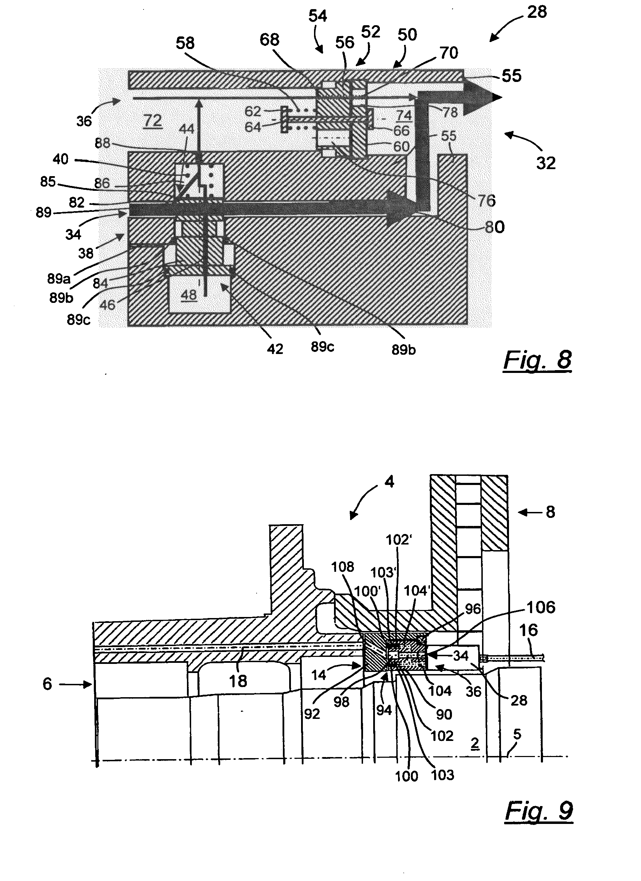

Fig. 8 zeigt die Drucksteuereinrichtung 28 beim Druckabbau. Die Ventile 44 und 54 befinden sich dabei in den Schaltstellungen gemäß Fig. 6. Zusätzlich sind in Fig. 8 jedoch Pfeile dargestellt, die andeuten, wie Druckluft im Falle einer Entlüftung des Belüftungseingangs 32 zu diesem Belüftungseingang 32 zurückströmt. Insbesondere führt ein Druckabfall am Belüftungseingang 32 zum Sperren des Rückschlagventils 54 im Drosselrückschlag 50, so dass ein Entlüften des Dichtungssteuerausgangs 36 nachfolgend nur noch durch die Bohrungen 68 und 70 und somit gedrosselt erfolgt. Der Belüftungsausgang 34 wird hingegen demgegenüber schnell über das Schaltventil 38 zum Belüftungseingang 32 entlüftet. Erst zu einem späteren Zeitpunkt, wenn im Allgemeinen davon ausgegangen werden kann, dass der Belüftungsausgang 34 vollständig entlüftet ist, hat sich der Steuerdruck am Schalteingang 42 durch gedrosseltes Abfließen von Druckluft durch die Drossel 46 und die Bohrung 88 sowie in diesem Fall durch die Drossel 52 im Drosselrückschlag 50 soweit verringert, dass das Schaltventil 38 mit der Kraft der Feder 40 seine Sperrstellung einnimmt. Die Schaltstellungen der Ventile 44 und 54 entsprechen den nachfolgend in Fig. 6 dargestellten Stellungen.

Ein ggf. noch vorhandener Überdruck am Belüftungsausgang 34 kann in der Sperrstellung des Schaltventils 38 durch das Rückschlagventil 44 bzw. durch die Nut 89, die Kammer 86 und die Bohrung 88, zum Dichtungssteuerausgang 36 bzw. zum Belüftungseingang 32 abgeführt werden.

Fig. 9 zeigt eine vergrößerte Darstellung von Teilen der Darstellung gemäß Fig. 1. Insbesondere sind Details der Drehdurchführung 14 gegenüber der Darstellung aus Fig. 1 vergrößert dargestellt und werden nachfolgend erstmals bezeichnet.

Die Drehdurchführung 14 weist einen Stator 90 und einen Rotor 92 auf. Der Stator 90 und der Rotor 92 sind durch einen Spalt 94 voneinander beabstandet, so dass der Rotor 92 gegenüber dem Stator 90 kontaktlos drehen kann. Drehachse für den Rotor 92 ist dabei die Drehachse 5 der Achse 2.

Der Spalt 94 wird an einem äußeren Rand durch eine Schmutzabweisedichtung 96 abgedichtet, die einem Eindringen von Schmutz in diesen Spalt 94 entgegenwirkt. Der Stator 90 weist eine konzentrisch um die Drehachse 5 angeordnete Nut bzw. einen konzentrischen Ringspalt als Luftkammer 98 auf. Der Spalt 94 kann beiderseits der Luftkammer 98 mittels Dichtungen 100 und 100' abgedichtet werden. Die Dichtungen sind konzentrisch um die Drehachse der Achse 2 angeordnet und axial verschiebbar in konzentrisch um die Drehachse 5 angeordneten Dichtungsringnuten 102 und 102' gelagert. Die Dichtungsringnuten 102 und 102' sind ausgehend vom Spalt 94 hinter den Dichtungen 100 und 100' mittels konzentrisch um die Drehachse 5 in diesen Dichtungsringnuten 102 und 102' angeordneten O-Ringen 103 und 103' abgedichtet. Weiter hinter den Dichtungsringnuten 102 und 102' münden Steuerleitungen 104 und 104' in die Dichtungsringnut 102 bzw. 102', die gemeinsam mit dem Dichtungssteuerausgang 36 der Drucksteuereinrichtung 28 verbunden sind. Der Belüftungsausgang 34 der Drucksteuereinrichtung 28 ist über eine Arbeitsleitung 106 mit der Luftkammer 98 verbunden. Korrespondierend zur Luftkammer 98 grenzt rotorseitig eine Arbeitsleitung 108 an den Spalt 94, die in den Druckluftkanal 18 mündet, wobei ein Übergang zwischen der Arbeitsleitung 108 und dem Druckluftkanal 18 als gegen die Umgebung abgedichtet zu verstehen ist.

Bei Druckbeaufschlagung des Dichtungssteuerausgangs 36 drückt Druckluft gegen die O-Ringe 103 und 103', welche wiederum gegen die Dichtungen 100 und 100' drücken, die somit, den Spalt 94 überbrückend, gegen den Rotor 92 pressen. Dadurch ist, insbesondere mittels der Arbeitsleitungen 106 und 108 sowie mittels der gegenüber der Umgebung abgedichteten Luftkammer 98, eine einkanalige Drehdurchführung vom Belüftungsausgang 34 zum Druckluftkanal 18 bereitgestellt, über die der Reifen belüftet oder entlüftet werden kann.

Eine Entlüftung des Dichtungssteuerausgangs 36 bewirkt, dass die Dichtungen 100 und 100' sich in der Dichtungsringnut 102 bzw. 102' zurückbewegen und den Spalt 94 wieder freigeben, so dass die Dichtungen 100 und 100' vor Verschleiß durch ansonsten stattfindende Reibung am Rotor 92 geschützt sind. Das Verschieben der Dichtungen 100 und 100' zum Freigeben des Spaltes 94 kann ggf. durch Federn oder andere Rückstellelemente unterstützt werden.

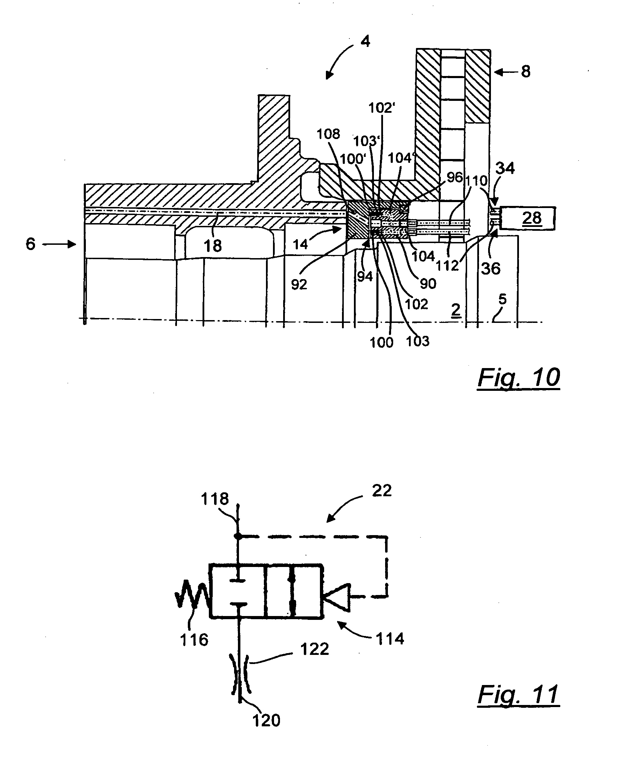

Fig. 10 zeigt die in Fig. 9 dargestellten Teile, wobei jedoch die Drucksteuereinrichtung 28 nicht wie in Fig. 9 direkt an die Drehdurchführung 14 angeflanscht ist bzw. mit dem Stator 90 der Drehdurchführung 14 baulich eine Einheit bildet, sondern abseits der Nabe 4 separat angeordnet ist. Der Belüftungsausgang 34 und der Dichtungssteuerausgang 36 der Drucksteuereinrichtung 28 sind daher nicht direkt mit der Arbeitsleitung 106 bzw. mit der Steuerleitung 104 verbunden, sondern eine jeweilige pneumatische Verbindung wird über eine Druckluftleitung 110 bzw. 112 bereitgestellt. Zur Drucksteuereinrichtung 28 muss dennoch nur der hier nicht dargestellte Druckluftkanal 16 von der ebenfalls nicht dargestellten zentralen Ventileinheit herangeführt werden. Die Drucksteuereinrichtung 28 kann deshalb vorteilhaft abseits dieser zentralen Ventileinheit und in der Nähe des die Achse 2 aufweisenden Rades 1 angeordnet werden, insbesondere wenn die Konstruktion der Nabe 4 keine Integration der Drucksteuereinrichtung 28 in die Nabe 4 bzw. in das Radlager 6 zulässt.

Fig. 11 zeigt ein Schaltbild des Radventils 22 aus Fig. 1 in der Reifenfüllanlage 30. Das Radventil 22 ist als 2/2-Wegeventil mit einem pneumatischen Steuereingang 114 und einer Feder 116 ausgebildet. Weiter weist das Radventil 22 einen Radventileingang 118 und einen Radventilausgang 120 auf. Der Radventileingang 118 ist mit dem Steuereingang 114 verbunden. Im entlüfteten Zustand des Radventileingangs 118 nimmt das Radventil 22 mit der Kraft der Feder 116 eine Sperrstellung des Radventilausgangs 120 gegenüber dem Radventileingang 118 ein. Wenn hingegen der Druck am Radventileingang 118 und somit auch der Druck am Steuereingang 114 einen baulich vorgegebenen Mindestdruck erreicht oder überschreitet, nimmt das Radventil 22 eine Durchgangsstellung vom Radventileingang 118 zum Radventilausgang 120 ein. Dem Radventilausgang 120 ist eine Drossel 122 vorgeschaltet oder nachgeschaltet, so dass der Druck am Radventileingang 118 zum Sperren des Radventils 22 unter dem vorgegebenen Mindestdruck abgesenkt werden kann, ohne dass über den Radventilausgang 120 und das Radventil 22 zurückströmende Luft aus dem Reifen 12 dies verhindern würde.

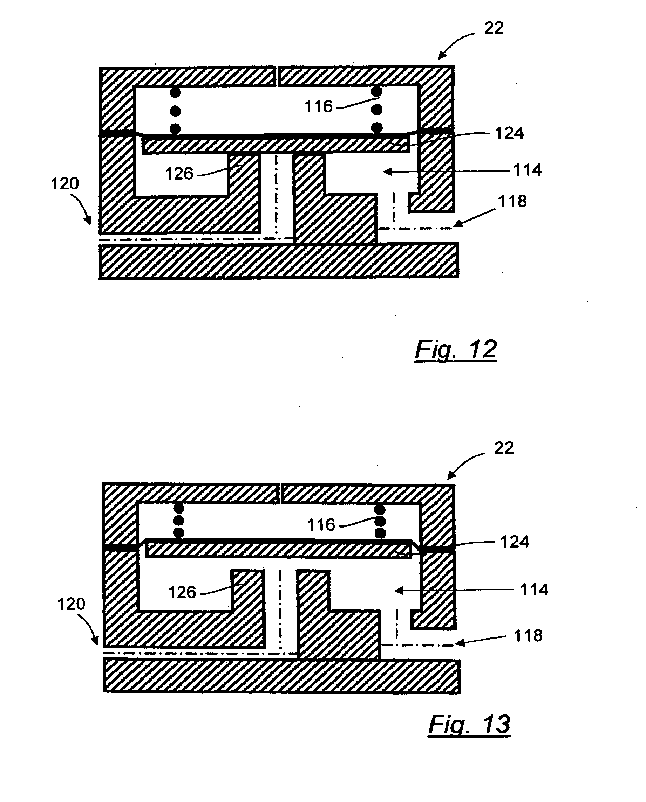

Fig. 12 und 13 zeigen eine erste bzw. zweite Schnittdarstellung einer konstruktiven Ausgestaltung des Radventils 22 gemäß Fig. 11, wobei Fig. 12 das Radventil 22 in seiner Sperrstellung und Fig. 13 dieses Radventil 22 in seiner Durchgangsstellung zeigt.

Das Radventil 22 ist dabei derart ausgebildet, dass der Radventileingang 118 zugleich den Steuereingang 114 bildet. Die Drossel 122 ist durch eine den Radventilausgang 120 bildende bzw. eine zum Radventilausgang 120 führende Bohrung gebildet, die einen verminderten Querschnitt gegenüber dem Radventileingang 118 bzw. einer zum Radventileingang 118 führenden Bohrung hat. Daher kann zwar ein langsames Entlüften des Reifens vom Radventilausgang 120 zum Radventileingang 118 stattfinden, ohne dass das Radventil 22 schließt. Insbesondere hält der Druck am Radventileingang 118 bzw. am Steueranschluss 114 einen Absperrkörper 124 gegen die Kraft der Feder 116 von einem Ventilsitz 126 beabstandet. Bei einem vergleichsweise stärkeren Druckabfall am Radventileingang 118 unter den vorgegebenen Mindestdruck ist jedoch über den Radventilausgang 120 nachströmende Luft nicht in der Lage, den Absperrkörper 124 des Radventils 22 gegen die Kraft der Feder 116 vom Ventilsitz 126 beabstandet zu halten.

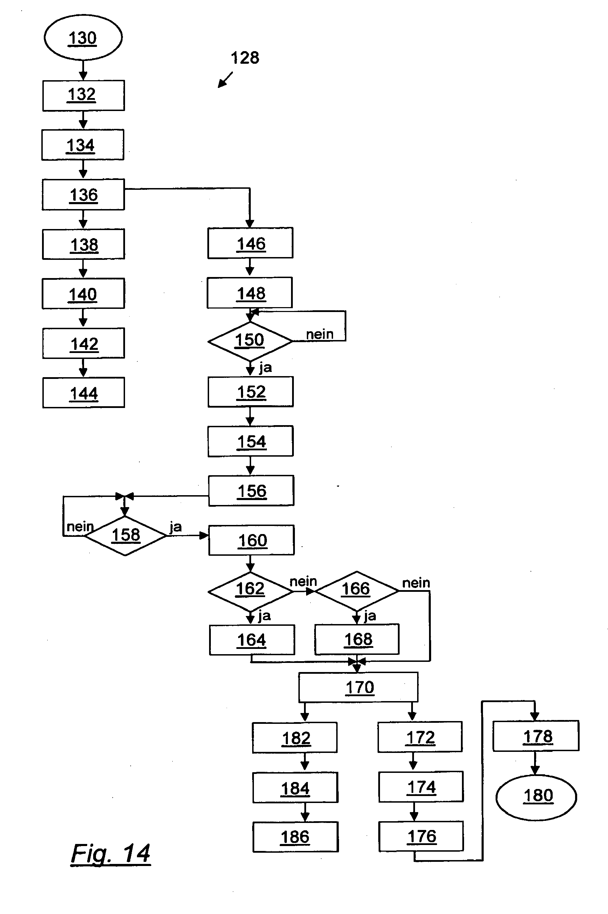

Fig. 14 zeigt eine schematische Darstellung eines Reifendruckänderungsverfahrens 128 gemäß einem Ausführungsbeispiel der Erfindung. Nach dem Start 130, bei dem die Drehdurchführung 14 entlüftet ist und somit kein Überdruck am Belüftungseingang 32, am Belüftungsausgang 34 und am Dichtungssteuerausgang 36 anliegt, soll der Druck im Reifen 12 verändert werden. Hierfür steuert die in der Beschreibung zu Fig. 1 genannte zentrale Ventileinheit, beispielsweise mittels Elektromagnetventilen, einen neuen einzustellenden Reifendruck aus und stellt von einem Kompressor bereitgestellte Druckluft mit diesem einzustellenden Druck gemäß einem Schritt 132 bereit. Diese bereitgestellte Druckluft wird über den Druckluftkanal 16 der Drucksteuereinrichtung 28 zugeführt, welche gemäß einem Schritt 134 diese Druckluft am Belüftungseingang 32 empfängt. Am Belüftungseingang 34 baut sich aufgrund der Belüftung gemäß einem Schritt 136 ein Belüftungseingangsdruck auf.

In Erwiderung auf das Empfangen 134 der Druckluft am Belüftungseingang 32 und das Aufbauen 136 des Belüftungseingangsdrucks wird gemäß einem Schritt 138 der Dichtungssteuerausgang 36 über das Rückschlagventil 54 bzw. über den Drosselrückschlag 50, insbesondere maximal mit einem ersten Volumenstrom, belüftet. Dies hat zur Folge, dass sich gemäß einem Schritt 140 ein Dichtungssteuerdruck am Dichtungssteuerausgang 36 aufbaut. Zudem strömt Druckluft über den Dichtungssteuerausgang 36 in die Dichtungsringnuten 102 und 102'. Es werden somit gemäß einem Schritt 142 die Dichtungen 100 und 100' aktiviert bzw. den Spalt 94 überbrückend an den Rotor 92 angelegt. Dadurch wird gemäß einem Schritt 144 die Luftkammer 98 abgedichtet.

Das Empfangen 134 von Luftdruck am Belüftungseingang 32 und das Aufbauen 136 des Belüftungseingangsdrucks hat auch eine Belüftung des Schalteingangs 42 des Schaltventils 38 zur Folge. Gemäß einem Schritt 146 begrenzt jedoch die Drossel 46 den Volumenstrom zum Schalteingang 42 des Schaltventils 38. Insbesondere wird maximal ein zweiter Volumenstrom erreicht, der geringer ist als der erste Volumenstrom, mit dem gemäß dem Schritt 138 der Dichtungssteuerausgang 36 belüftet wird. Als Folge kommt es gemäß einem Schritt 148 zu einem Aufbauen des Schaltdrucks am Schalteingang 42, das gegenüber dem Aufbauen 140 des Dichtungssteuerdrucks verzögert ist. Solange der Schaltdruck gemäß einer Abfrage 150 nicht mindestens so groß ist wie der definierte Mindestschaltdruck bleibt das Schaltventil 38 in seiner Sperrstellung. Erst wenn zumindest der Mindestschaltdruck vom Schaltdruck erreicht ist, bewirkt der Schaltdruck gemäß einem Schritt 152 ein Schalten des Schaltventils 38 in seine Durchgangsstellung.

Dem Belüftungsausgang 34 können Druckuntersetzungsmittel vorgeschaltet sein, die über das Schaltventil 38 angesteuert und belüftet werden, jedoch gemäß einem Schritt 154 den Belüftungsausgangsdruck mit einem gegenüber dem Belüftungseingangsdruck reduzierten Druck bzw. druckuntersetzt bereitstellen. Mit diesem Belüftungsausgangsdruck wird in einem Schritt 156 der Belüftungsausgang 34 mit Druckluft belüftet.

Durch den Belüftungsausgang 34 wird Druckluft durch die Drehdurchführung 14 zum Steuereingang des Radventils 22 geleitet, das, sobald gemäß einer Abfrage 158 der am Steuereingang 114 vorliegende Druck mindestens so groß wie ein zum Schalten erforderlicher Mindestdruck ist, gemäß einem Schritt 160 seine Durchgangsstellung einnimmt bzw. von der Sperrstellung in die Durchgangsstellung wechselt. Als Folge wird eine Verbindung vom Belüftungsausgang 34 der Drucksteuereinrichtung 28 zum Reifen 12 freigeschaltet, so dass der Reifen belüftet oder entlüftet wird, bis sich der Reifendruck auf den vorgesehenen neuen Reifendruck eingestellt hat, der mit dem Belüftungsausgangsdruck am Belüftungsausgang 34 übereinstimmt bzw. vom Belüftungseingangsdruck am Belüftungseingang 32 vorgegeben ist.

Hierfür kann die zentrale Ventileinheit über einen Drucksensor verfügen und in Abhängigkeit von mittels dieses Drucksensors sensierten Werten dem Belüftungseingang 32 der Drucksteuereinrichtung 28 weitere Druckluft zuführen oder Druckluft abführen, um den gewünschten Belüftungseingangsdruck aufrechtzuerhalten und somit schließlich den gewünschten Reifendruck zu erhalten.

Insbesondere wird, wenn gemäß einer Abfrage 162 der Belüftungsausgangsdruck über dem Reifendruck liegt und der Radventileingangsdruck mindestens so groß ist wie der erforderliche Mindestdruck, gemäß einem Schritt 164 der Reifen über die Drehdurchführung 14 belüftet. Wenn dagegen gemäß einer Abfrage 166 der Belüftungsausgangsdruck kleiner ist als der Reifendruck und der Radventileingangsdruck wiederum mindestens so groß ist wie der Mindestdruck, wird gemäß einem Schritt 168 der Reifen 12, insbesondere über das Schaltventil 38 und die Bohrung 88, entlüftet. Falls nach dem Schließen des Schaltventils 38 am Betüftungsausgang 34 ein Restdruck verbleiben sollte, strömt Druckluft durch die Nut 89, drückt die Dichtscheibe 85 gegen die Kraft der Feder 40 vom Absperrkörper 84 weg und strömt durch einen Spalt zwischen dem Absperrkörper 84 und der Dichtscheibe 85 und nachfolgend durch eine Öffnung in der Dichtscheibe, die Kammer 86, die Bohrung 88 und den Drosselrückschlag 50 zum Belüftungseingang 32.

An der zentralen Ventileinheit kann beispielsweise festgestellt werden, dass keine Druckluft mehr zum Belüftungseingang 32 der Drucksteuereinrichtung 28 nachgeführt oder von diesem Belüftungseingang 32 zum Aufrechterhalten des eingestellten Drucks abgeführt werden muss. Daran wird erkannt, dass der gewünschte Reifendruck eingestellt ist. Beispielsweise in Erwiderung darauf folgt gemäß einem Schritt 170 ein schnelles, insbesondere vollständiges, Entlüften des Belüftungseingangs 32, insbesondere durch die zentrale Ventileinheit. In der Folge kommt es zu einem schnellen Entlüften 172 des Belüftungsausgangs 34, insbesondere über das Rückschlagventil 44. Das Entlüften erfolgt dabei schnell bzw. mit einem Volumenstrom, der größer ist als ein Volumenstrom, mit dem Druckluft aus dem Reifen 12 über die Drossel 122 am Radventil 22 nachströmt. Dies hat zur Folge, dass gemäß einem Schritt 174 der Radventileingangsdruck unter den Mindestdruck abfällt und das Radventil 22 folglich gemäß einem Schritt 176 seine Sperrstellung einnimmt.

Der zu diesem Zeitpunkt im Reifen 12 vorliegende Reifendruck wird nachfolgend gemäß einem Schritt 178 gehalten, wohingegen der Druckluftkanal 20, der Druckluftkanal 18, die Drehdurchführung 14, die Drucksteuereinrichtung 28 und der Druckluftkanal 16 vollständig, insbesondere auf den Umgebungsluftdruck, entlüftet werden. Damit ist das Ende 180 einer Reifendruckänderung erreicht.

Parallel zum schnellen Entlüften 172 des Belüftungsausgangs hat das Entlüften des Belüftungseingangs 170 gemäß einem Schritt 182 zur Folge, dass auch der Dichtungssteuerausgang 36 über die Drossel 52 bzw. über den Drosselrückschlag 50 gedrosselt entlüftet wird. Aufgrund der Drossel 52 fällt der Dichtungssteuerausgangsdruck jedoch vergleichsweise langsam gegenüber dem Belüftungsausgangsdruck ab, so dass es gemäß einem Schritt 184 zu einem, insbesondere gegenüber dem vollständigen Entlüften des Belüftungsausgangs 34, verzögertem bzw. gebremstem Lösen bzw. Deaktivieren der Dichtungen 100 und 100' kommt. Daher öffnet sich gemäß einem Schritt 186 die Luftkammer 98 zu den zuvor abgesperrten Teilen des Spaltes 94 bzw. zur Umgebung erst dann, wenn die einkanalige Drehdurchführung 14 mit den Arbeitsleitungen 108 und 106 sowie mit der Luftkammer 98 vollständig, insbesondere auf den Umgebungsluftdruck, entlüftet ist.

Alle in der vorstehenden Beschreibung und in den Ansprüchen genannten Merkmale sind sowohl einzeln als auch in beliebiger Kombination miteinander einsetzbar. Die Offenbarung der Erfindung ist somit nicht auf die beschriebenen bzw. beanspruchten Merkmalskombinationen beschränkt. Vielmehr sind alle Merkmalskombinationen als offenbart zu betrachten.

### Bezugszeichenliste

- 1: Rad
- 2: Achse
- 4: Nabe
- 5: Drehachse
- 6: Radlager
- 8: Bremseinrichtung
- 10: Felge
- 12: Reifen
- 14: Drehdurchführung
- 16: Druckluftkanal
- 18: Druckluftkanal
- 20: Druckluftkanal
- 22: Radventil
- 24: Druckluftkanal
- 26: Reifenfüllventil
- 28: Drucksteuereinrichtung
- 30: Reifenfüllanlage
- 32: Belüftungseingang
- 34: Belüftungsausgang
- 36: Dichtungssteuerausgang
- 38: Schaltventil
- 40: Feder
- 42: Schalteingang
- 44: Rückschlagventil
- 46: Drossel
- 48: Druckbehälter
- 50: Drosselrückschlag
- 52: Drossel
- 54: (weiteres) Rückschlagventil
- 55: Gehäuse/Ventilblock
- 56: Absperrkörper
- 58: Feder
- 60: Ventilsitz
- 62: Widerlager
- 64: Stange
- 66: Widerlager
- 68: Bohrung
- 70: Bohrung
- 72: Ausströmseite des Drosselrückschlags
- 74: Einströmseite des Drosselrückschlags
- 76: Bohrung
- 76': Bohrung
- 76": Bohrung
- 78: Bohrung
- 78': Bohrung
- 78": Bohrung
- 79: Druckraum
- 80: Druckluftleitung
- 82: Druckluftleitung
- 84: Absperrkörper
- 85: Dichtscheibe
- 86: Kammer
- 88: Bohrung
- 89: Nut
- 89a: Bohrung
- 89b: Dichtring
- 89c: Dichtring
- 90: Stator
- 92: Rotor
- 94: Spalt
- 96: Schmutzabweisedichtung
- 98: Luftkammer
- 100: Dichtung
- 100': Dichtung
- 102: Dichtungsringnut
- 102': Dichtungsringnut
- 103: O-Ring
- 103': O-Ring
- 104: Steuerleitung
- 104': Steuerleitung
- 106: Arbeitsleitung
- 108: Arbeitsleitung
- 110: Druckluftleitung
- 112: Druckluftleitung
- 114: Steuereingang (des Radventils 22)
- 116: Feder
- 118: Radventileingang
- 120: Radventilausgang
- 122: Drossel
- 124: Absperrkörper
- 126: Ventilsitz
- 128: Reifendruckänderungsverfahren
- 130: Start
- 132: Bereitstellen von Druckluft mit einem einzustellenden Reifendruck
- 134: Empfangen von Druckluft am Belüftungseingang
- 136: Aufbauen eines Belüftungseingangsdrucks
- 138: Belüften des Dichtungssteuerausgangs
- 140: Aufbauen eines Dichtungssteuerdrucks
- 142: Aktivieren der Dichtungen
- 144: Abdichten der Luftkammer
- 146: Drossel begrenzt den Volumenstrom / verzögert Druckaufbau
- 148: verzögerter Aufbau des Schaltdrucks
- 150: Abfrage: Schaltdruck ≥ Mindestschaltdruck?
- 152: Schalten des Schaltventils in Durchgangstellung
- 154: Bereitstellen der Belüftungsausgangsdrucks über Druckuntersetzungsmittel
- 156: Belüften des Belüftungsausgangs
- 158: Abfrage: Druck am Steuereingang des Radventils ≥ Mindestdruck?
- 160: Radventil nimmt Durchgangsstellung ein
- 162: Abfrage: Belüftungsausgangsdruck > Reifendruck und Radventileingangsdruck ≥ Mindestdruck?
- 164: Belüften des Reifens
- 166: Abrage: Belüftungseingangsdruck < Reifendruck und Radventileingangsdruck ≥ Mindestdruck?
- 168: Entlüften des Reifens
- 170: schnelles Entlüften des Belüftungseingangs
- 172: schnelles Entlüften des Belüftungsausgangs
- 174: Abfallen des Radventileingangsdrucks unter Mindestdruck
- 176: Radventil nimmt Sperrstellung ein
- 178: Halten des Reifendrucks
- 180: Ende
- 182: Entlüften des Dichtungssteuerausgangs über Drossel
- 184: verzögertes Deaktivieren der Dichtungen
- 186: Öffnen der Luftkammer 98

## Patentansprüche

1. Drucksteuereinrichtung (28) für eine eine Drehdurchführung (14) mit einem Stator (90) und einem Rotor (92) aufweisenden Reifenfüllanlage (30) eines Kraftfahrzeugs, das wenigstens einen mit Druckluft durch die Drehdurchführung (14) belüftbaren Reifen (12) aufweist, wobei die Drucksteuereinrichtung (28) aufweist:
- einen Belüftungseingang (32) zum Empfangen (134) von Druckluft mit einem Belüftungseingangsdruck,
- einen Belüftungsausgang (34) zum Belüften (164) des Reifens (12) mit einem Belüftungsausgangsdruck über die Drehdurchführung (14),
- einen Dichtungssteuerausgang (36) zum Aktivieren (142) wenigstens einer Dichtung (100, 100') mittels Druckluft mit einem Dichtungssteuerdruck zum Abdichten (144) einer zwischen dem Stator (90) und dem Rotor (92) angeordneten Luftkammer (98),
- ein pneumatisch mittels eines Schaltdrucks schaltbares Schaltventil (38) zum Belüften (156) des Belüftungsausgangs (34) mit dem Belüftungsausgangsdruck nur dann, wenn der Schaltdruck wenigstens so hoch ist wie ein definierter Mindestschaltdruck (158), und
- eine Druckluftführung derart, dass zum Belüften (156) des Belüftungsausgangs (34) in Erwiderung auf einen Aufbau (136) des Belüftungseingangsdrucks am zuvor entlüfteten Belüftungseingang (32) zumindest auf den Mindestschaltdruck sowohl ein Druckaufbau des Schaltdrucks als auch des Dichtungssteuerdrucks erfolgt (148,140), dabei jedoch der Druckaufbau des Schaltdrucks auf diesen Mindestschaltdruck gegenüber dem Druckaufbau des Dichtungssteuerdrucks auf diesen Mindestschaltdruck verzögert erfolgt (148).

2. Drucksteuereinrichtung nach Anspruch 1, **gekennzeichnet durch** eine Querschnittsverengung (46), insbesondere Drossel, und einen der Querschnittsverengung (46) nachgeschalteten und mit einem Schalteingang (42) des Schaltventils (38) verbundenen Druckbehälter (48) zum gemeinsamen Verzögern (146) des Druckaufbaus des Schaltdrucks.

3. Drucksteuereinrichtung nach Anspruch 1 oder 2, **gekennzeichnet durch** ein Rückschlagventil (44) zum Entlüften (172) des Belüftungsausgangs (34) zum Belüftungseingang (32) über das Rückschlagventil (44).

4. Drucksteuereinrichtung nach einem der vorherigen Ansprüche, **gekennzeichnet durch** ein weiteres Rückschlagventil (54) zum Belüften (138) des Dichtungssteuerausgangs (36) über das weitere Rückschlagventil (54) maximal mit einem ersten Volumenstrom und eine Drossel (52) zum gedrosselten Entlüften (182) des Dichtungssteuerausgangs über die Drossel (52) maximal mit einem, gegenüber dem ersten Volumenstrom verminderten, zweiten Volumenstrom.

5. Drucksteuereinrichtung nach einem der vorherigen Ansprüche, **gekennzeichnet durch** dem Belüftungsausgang (34) vorgeschaltete Druckuntersetzungsmittel zum Bereitstellen (154) von Druckluft am Belüftungsausgang (34) mit einem gegenüber dem Belüftungseingangsdruck am Belüftungseingang (32) reduzierten Belüftungsausgangsdruck.

6. Drehdurchführung für eine Reifenfüllanlage (30) eines Kraftfahrzeugs, wobei die Drehdurchführung (14) einen Stator (90), einen Rotor (92) und eine, insbesondere in den Stator (90) baulich integrierte, Drucksteuereinrichtung (28, 28') nach einem der Ansprüche 1 bis 5 aufweist.

7. Reifenfüllanlage für ein Kraftfahrzeug, das wenigstens einen zusammen mit einem Rotor (92) drehbaren Reifen (12) aufweist, wobei die Reifenfüllanlage (30) eine einen Stator (90) und den Rotor (92) aufweisende Drehdurchführung (14) und eine Drucksteuereinrichtung (28, 28') nach einem der Ansprüche 1 bis 5 oder eine Drehdurchführung (14) mit integrierter Drucksteuereinrichtung (28) nach Anspruch 6 aufweist.

8. Reifenfüllanlage nach Anspruch 7, **gekennzeichnet durch** ein der Drehdurchführung (14) nachgeschaltetes, dem Reifen (12) vorgeschaltetes und als 2/2-Wegeventil ausgebildetes Radventil (22) mit einem gedrosselten Radventilausgang (120) und mit einem mit einem Steuereingang (114) des Radventils (22) verbundenen Radventileingang (118), wobei das Radventil (22) derart ausgebildet ist, dass es eine Durchgangsstellung einnimmt (160), wenn der Druck am Radventileingang (118) mindestens so hoch ist wie ein definierter Mindestdruck und eine Sperrstellung einnimmt (176), wenn der Druck am Radventileingang (118) niedriger ist als dieser oder ein anderer Mindestdruck.

9. Reifenfüllanlage nach Anspruch 7 oder 8,
**dadurch gekennzeichnet, dass** die Drehdurchführung (14) mit einem Radlager (6) des den Reifen (12) aufweisenden Rades (1) und/oder mit einer diesem Rad (1) zuordneten ABS-Geschwindigkeitssensorik konstruktiv zu einer Einheit zusammengefasst ist.

10. Kraftfahrzeug mit einer Reifenfüllanlage (30) nach einem der Ansprüche 7 bis 9.

11. Reifendruckänderungsverfahren, bei dem mittels einer eine Drehdurchführung (14) mit einem Stator (90) und einen Rotor (92) aufweisenden Reifenfüllanlage (30) eines Kraftfahrzeugs wenigstens ein Reifen (12) dieses Kraftfahrzeugs durch die Drehdurchführung (14) belüftet (164) wird, wobei
- eine Drucksteuereinrichtung (28) mit einem Belüftungseingang (32), einem Belüftungsausgang (34), einem Dichtungssteuerausgang (36) und einem pneumatisch mittels eines Schaltdrucks schaltbaren Schaltventil (38) über den Belüftungseingang (32) Druckluft mit einem Belüftungseingangsdruck empfängt (134),
- über den Dichtungssteuerausgang (36) mittels Druckluft mit einem Dichtungssteuerdruck wenigstens eine Dichtung (100, 100') aktiviert (142) und dadurch eine zwischen dem Stator (90) und dem Rotor (92) angeordnete Luftkammer (98) abdichtet (144) und
- über den Belüftungsausgang (34) und dadurch weiter über die Drehdurchführung (14) den Reifen (12) mit einem Belüftungsausgangsdruck belüftet (164),
- wobei der Belüftungsausgang (34) nur dann mit dem Belüftungsausgangsdruck mittels des Schaltventils (38) belüftet (156) wird, wenn der Schaltdruck wenigstens so hoch ist wie ein definierter Mindestschaltdruck (158), und
- wobei der Belüftungseingangsdruck am zuvor entlüfteten Belüftungseingang (32) zum Belüften (156) des Belüftungsausgangs (34) zumindest auf den Mindestschaltdruck aufgebaut (136) wird und in Erwiderung darauf sowohl der Schaltdruck als auch der Dichtungssteuerdruck aufgebaut werden (148, 140), wobei die Druckluft in der Drucksteuereinrichtung (28) derart geführt wird, dass sich der Schaltdruck gegenüber dem Dichtungssteuerdruck verzögert auf den Mindestschaltdruck aufbaut (148).

12. Reifendruckänderungsverfahren nach Anspruch 11,
**dadurch gekennzeichnet, dass**
eine Querschnittsverengung (46), insbesondere Drossel, und ein der Querschnittsverengung (46) nachgeschalteter und mit einem Schalteingang (42) des Schaltventils (38) verbundener Druckbehälter (48) den Druckaufbau des Schaltdrucks gemeinsam verzögern (146).

13. Reifendruckänderungsverfahren nach Anspruch 11 oder 12,
**dadurch gekennzeichnet, dass**
über ein Rückschlagventil (44) der Belüftungsausgang (34) zum Belüftungseingang (32) entlüftet (172) wird.

14. Reifendruckänderungsverfahren nach einem der Ansprüche 11 bis 13,
**dadurch gekennzeichnet, dass**
der Dichtungssteuerausgang (36) über ein weiteres Rückschlagventil (54) maximal mit einem ersten Volumenstrom belüftet (138) wird und über eine querschnittsreduzierte Verbindung (52) maximal mit einem, gegenüber dem ersten Volumenstrom verminderten, zweiten Volumenstrom gedrosselt entlüftet (182) wird.

15. Reifendruckänderungsverfahren nach einem der Ansprüche 11 bis 14,
**dadurch gekennzeichnet, dass**
dem Belüftungsausgang (34) vorgeschaltete Druckuntersetzungsmittel Druckluft am Belüftungsausgang (34) mit einem gegenüber dem Belüftungseingangsdruck am Belüftungseingang (32) reduzierten Belüftungsausgangsdruck bereitstellen (154).

16. Reifendruckänderungsverfahren nach einem der Ansprüche 11 bis 15,
**dadurch gekennzeichnet, dass**
ein der Drehdurchführung (14) nachgeschaltetes, dem Reifen (12) vorgeschaltetes und als 2/2-Wegeventil ausgebildetes Radventil (22) mit einem gedrosselten Radventilausgang (120) und mit einem mit einem Steuereingang (114) des Radventils (22) verbundenen Radventileingang (118) eine Durchgangsstellung einnimmt (160), wenn der Druck am Radventileingang (118) mindestens so hoch ist wie ein definierter Mindestdruck, und eine Sperrstellung einnimmt (176), wenn der Druck am Radventileingang (118) niedriger ist als dieser oder ein anderer Mindestdruck.

## Claims

1. Pressure control device (28) for a tyre inflating system (30), comprising a rotary feedthrough (14) having a stator (90) and a rotor (92), of a motor vehicle that comprises at least one tyre (12) that can be inflated with compressed air by way of the rotary feedthrough (14), wherein the pressure control device (28) comprises:
- a ventilating inlet (32) for receiving (134) compressed air with a ventilating inlet pressure,
- a ventilating outlet (34) for inflating (164) the tyre (12) with a ventilating outlet pressure by way of the rotary feedthrough (14),
- a seal actuating outlet (36) for activating (142) at least one seal (100, 100') by means of compressed air with a seal actuating pressure for sealing (144) an air chamber (98) that is arranged between the stator (90) and the rotor (92),
- a switchover valve (38) that can be pneumatically switched by means of a switching pressure in order to ventilate (156) the ventilating outlet (34) with the ventilating outlet pressure only if the switching pressure is at least as high as a predefined minimum switching pressure (158), and
- a compressed air guide of the type that in order to ventilate (156) the ventilating outlet (34) in response to a build-up (136) of the ventilating inlet pressure at the previously vented ventilating inlet (32) at least to the minimum switching pressure, builds up both the switching pressure and also the seal actuating pressure (148, 140) but delays (148) the build up of the switching pressure to this minimum switching pressure with respect to the build-up of the seal actuating pressure to this minimum switching pressure.

2. Pressure control device according to Claim 1, **characterized by** a narrowing of the cross section (46), in particular a restriction, and a pressure storage container (48) that is connected downstream of the narrowing of the cross section (46) and is connected to a switching inlet (42) of the switchover valve (38) in order to collectively delay (146) the build-up of the switching pressure.

3. Pressure control device according to Claim 1 or 2, **characterized by** a non-return valve (44) for venting (172) the ventilating outlet (34) to the ventilating inlet (32) by way of the non-return valve (44).

4. Pressure control device according to any one of the preceding claims, **characterized by** an additional non-return valve (54) for ventilating (138) the seal actuating outlet (36) by way of the additional non-return valve (54) at the most with a first volume flow and a restriction (52) for venting (182) the seal actuating outlet in a restricted manner by way of the restriction (52) at the most with a second volume flow that is reduced in comparison to the first volume flow.

5. Pressure control device according to any one of the preceding claims, **characterized by** the pressure reducing means that are connected upstream of the ventilating outlet (34) in order to provide (154) compressed air at the ventilating outlet (34) with a ventilating outlet pressure that is reduced in comparison to the ventilating inlet pressure at the ventilating inlet (32).

6. Rotary feedthrough for a tyre inflating system (30) of a motor vehicle, wherein the rotary feedthrough (14) comprises a stator (90), a rotor (92) and a pressure control device (28, 28') according to any one of the Claims 1 to 5, which pressure control device is structurally integrated in particular in the stator (90).

7. Tyre inflating system for a motor vehicle that comprises at least one tyre (12) that can be rotated together with a rotor (92), wherein the tyre inflating system (30) comprises a rotary feedthrough (14) that comprises a stator (90) and the rotor (92) and a pressure control device (28, 28') according to any one of the Claims 1 to 5 or a rotary feedthrough (14) with an integrated pressure control device (28) according to Claim 6.

8. Tyre inflating system according to Claim 7, **characterized by** a wheel valve (22) that is embodied as a 2/2 directional-control valve and is connected downstream of the rotary feedthrough (14) and upstream of the tyre (12), which wheel valve has a restricted wheel valve outlet (120) and a wheel valve inlet (118) that is connected to an actuating inlet (114) of the wheel valve (22), wherein the wheel valve (22) is embodied in such a manner that it assumes (160) a through-going position if the pressure at the wheel valve inlet (118) is at least as high as a predefined minimum pressure and assumes a blocking position (176) if the pressure at the wheel valve inlet (118) is lower than this minimum pressure or a different minimum pressure.

9. Tyre inflating system according to Claim 7 or 8, **characterized in that** the rotary feedthrough (14) is structurally consolidated into one unit with a wheel bearing (6) of the wheel (1) that comprises the tyre (12) and/or with an ABS-speed sensor system that is allocated to this wheel (1).

10. Motor vehicle having a tyre inflating system (30) according to any one of the Claims 7 to 9.

11. Tyre pressure changing method, in which by means of a tyre inflating system (30) of a motor vehicle at least one tyre (12) of this motor vehicle is inflated (164) by way of the rotary feedthrough (14), which tyre inflating system comprises a rotary feedthrough (14) having a stator (90) and a rotor (92), wherein
- a pressure control device (28) having a ventilating inlet (32), a ventilating outlet (34), a seal actuating outlet (36) and a switchover valve (38) that can be pneumatically switched by means of a switching pressure by way of a ventilating inlet (32), receives (134) compressed air with a ventilating inlet pressure,
- at least one seal (100, 100') is activated (142) by way of the seal actuating outlet (36) by means of compressed air with a seal actuating pressure and as a consequence seals (144) an air chamber (98) that is arranged between the stator (90) and the rotor (92), and
- by way of the ventilating outlet (34) and as a consequence further by way of the rotary feedthrough (14) the tyre (12) is inflated (164) with a ventilating outlet pressure,
- wherein the ventilating outlet (34) is only then ventilated (156) with the ventilating outlet pressure by means of the switchover valve (38), if the switching pressure is at least as high as a predefined minimum switching pressure (158), and
- wherein the ventilating inlet pressure is builtup (136) at least to the minimum switching pressure at the previously vented ventilating inlet (32) in order to ventilate (156) the ventilating outlet (34) and in response thereto both the switching pressure and also the seal actuating pressure are built up (148, 140), wherein the compressed air in the pressure control device (28) is supplied in such a manner that the switching pressure is built up (148) to the minimum switching pressure in a delayed manner in comparison to the seal actuating pressure.

12. Tyre pressure changing method according to Claim 11,
**characterized in that**
a narrowing of the cross section (46), in particular a restriction, and a pressure storage container (48) that is connected downstream of the narrowing of the cross section (46) and is connected to a switching inlet (42) of the switchover valve (38), together delay (146) the build-up of the switching pressure.

13. Tyre pressure changing method according to Claim 11 or 12,
**characterized in that**
the ventilating outlet (34) is vented (172) to the ventilating inlet (32) by way of a non-return valve (44).

14. Tyre pressure changing method according to any one of the Claims 11 to 13, **characterized in that**
the seal actuating outlet (36) is ventilated (138) by way of an additional non-return valve (54) at the most with a first volume flow and is vented (182) in a restricted manner by way of a connection with a reduced cross section (52) at the most with a second volume flow that is reduced in comparison to the first volume flow.

15. Tyre pressure changing method according to any one of the Claims 11 to 14,
**characterized in that**
pressure reducing means that are connected upstream of the ventilating outlet (34) provide (154) compressed air at the ventilating outlet (34) with a ventilating outlet pressure that is reduced in comparison to the ventilating inlet pressure at the ventilating inlet (32).

16. Tyre pressure changing method according to any one of the Claims 11 to 15,
**characterized in that**
a wheel valve (22) that is embodied as a 2/2 directional-control valve and is connected downstream of the rotary feedthrough (14) and upstream of the tyre (12) and has a restricted wheel valve outlet (120) and a wheel valve inlet (118) that is connected to an actuating inlet (114) of the wheel valve (22) assumes a through-going position (160) if the pressure at the wheel valve inlet (118) is at least as high as a predefined minimum pressure, and assumes a blocking position (176) if the pressure at the wheel valve inlet (118) is lower than this minimum pressure or a different minimum pressure.

## Revendications

1. Dispositif à commande par pression (28) pour une installation de gonflage des pneus (30) d'un véhicule automobile, comprenant un passage rotatif (14) avec un stator (90) et un rotor (92), qui comprend au moins un pneu (12) gonflable avec de l'air comprimé à travers le passage rotatif (14), dans lequel le dispositif à commande par pression (28) présente:
- une entrée d'air (32) pour recevoir (134) de l'air comprimé à une pression d'entrée d'air,
- une sortie d'air (34) pour le gonflage (164) du pneu (12) avec une pression de sortie d'air à travers le passage rotatif (14),
- une sortie de commande d'étanchéité (36) pour activer (142) au moins un joint d'étanchéité (100, 100') au moyen d'air comprimé avec une pression de commande d'étanchéité afin de fermer hermétiquement(144) une chambre à air (98) disposée entre le stator (90) et le rotor (92),
- une soupape de commande (38) commutable de façon pneumatique au moyen d'une pression de commutation pour alimenter (156) la sortie d'air (34) avec la pression de sortie d'air uniquement lorsque la pression de commutation est au moins aussi élevée qu'une pression de commutation minimale définie (158), et
- un guidage d'air comprimé, de telle manière que, pour alimenter (156) la sortie d'air (34) en réponse à une montée de la pression d'entrée d'air à l'entrée d'air (32) antérieurement détendue au moins à la pression de commutation minimale (136), il se produise aussi bien une montée en pression de la pression de commutation que de la pression de commande d'étanchéité (148, 140), mais que la montée en pression de la pression de commutation à cette pression de commutation minimale se produise en retard (148) par rapport à la montée en pression de la pression de commande d'étanchéité à cette pression de commutation minimale.

2. Dispositif à commande par pression selon la revendication 1, **caractérisé par** un étranglement de section transversale (46), en particulier une vanne papillon, et un réservoir sous pression (48) connecté en aval de l'étranglement de section transversale (46) et relié à une entrée de commutation (42) de la soupape de commande (38) pour le retardement commun (146) de la montée en pression de la pression de commutation.

3. Dispositif à commande par pression selon la revendication 1 ou 2, **caractérisé par** un clapet anti-retour (44) pour détendre (172) la sortie d'air (34) vers l'entrée d'air (32) via le clapet anti-retour (44).

4. Dispositif à commande par pression selon l'une quelconque des revendications précédentes, **caractérisé par** un autre clapet anti-retour (54) pour alimenter (138) la sortie de commande d'étanchéité (36) via l'autre clapet anti-retour (54) au maximum avec un premier courant volumique et une vanne papillon (52) pour la détente étranglée (182) de la sortie de commande d'étanchéité via la vanne papillon (52) au maximum avec un deuxième courant volumique réduit par rapport au premier courant volumique.

5. Dispositif à commande par pression selon l'une quelconque des revendications précédentes, **caractérisé par** des moyens de diminution de pression connectés en amont de la sortie d'air (34) pour la fourniture (154) d'air comprimé à la sortie d'air (34) avec une pression de sortie d'air réduite par rapport à la pression d'entrée d'air à l'entrée d'air (32).

6. Passage rotatif pour une installation de gonflage des pneus (30) d'un véhicule automobile, dans lequel le passage rotatif (14) présente un stator (90), un rotor (92) et un dispositif à commande par pression (28, 28') selon l'une quelconque des revendications 1 à 5, en particulier intégré par construction dans le stator (90).

7. Installation de gonflage des pneus pour un véhicule automobile, qui présente au moins un pneu (12) pouvant tourner en même temps qu'un rotor (92), dans laquelle l'installation de gonflage des pneus (30) présente un passage rotatif (14) présentant un stator (90) et le rotor (92) et un dispositif à commande par pression (28, 28') selon l'une quelconque des revendications 1 à 5 ou un passage rotatif (14) avec un dispositif à commande par pression (28) intégré selon la revendication 6.

8. Installation de gonflage des pneus selon la revendication 7, **caractérisé par** une soupape de roue (22) montée en aval du passage rotatif (14), montée en amont du pneu (12) et constituée par une soupape à 2/2 voies avec une sortie de soupape de roue étranglée (120) et avec une entrée de soupape de roue (118) reliée à une entrée de commande (114) de la soupape de roue (22), dans laquelle la soupape de roue (22) est configurée de telle manière qu'elle occupe une position de passage (160) lorsque la pression à l'entrée de soupape de roue (118) est au moins aussi élevée qu'une pression minimale définie et occupe une position d'arrêt (176) lorsque la pression à l'entrée de soupape de roue (118) est inférieure à celle-ci ou à une autre pression minimale.

9. Installation de gonflage des pneus selon la revendication 7 ou 8, **caractérisé en ce que** le passage rotatif (14) est rassemblé par construction en une unité avec un palier de roue (6) de la roue (1) présentant le pneu (12) et/ou avec un détecteur de vitesse-ABS associé à cette roue (1).

10. Véhicule automobile avec une installation de gonflage des pneus (30) selon l'une quelconque des revendications 7 à 9.

11. Procédé de modification de la pression des pneus, dans lequel, au moyen d'une installation de gonflage des pneus (30) d'un véhicule automobile, qui présente un passage rotatif (14) avec un stator (90) et un rotor (92), on gonfle (164) au moins un pneu (12) de ce véhicule automobile à travers le passage rotatif (14), dans lequel
- un dispositif à commande par pression (28) avec une entrée d'air (32), une sortie d'air (34), une sortie de commande d'étanchéité (36) et une soupape de commande (38) commutable de façon pneumatique au moyen d'une pression de commutation reçoit via l'entrée d'air (32) de l'air comprimé à une pression d'entrée d'air (134),
- au moins un joint d'étanchéité (100, 100') est activé (142) via la sortie de commande d'étanchéité (36) au moyen d'air comprimé avec une pression de commande d'étanchéité et une chambre à air (98) disposée entre le stator (90) et le rotor (92) est ainsi fermée hermétiquement (144), et
- on gonfle le pneu (12) avec une pression de sortie d'air (164) via la sortie d'air (34) et dès lors ensuite via le passage rotatif (14),
- dans lequel la sortie d'air (34) n'est alimentée (156) en air avec la pression de sortie d'air au moyen de la soupape de commande (38) que lorsque la pression de commutation est au moins aussi élevée qu'une pression de commutation minimale déterminée (158), et
- dans lequel la pression d'entrée d'air à l'entrée d'air antérieurement détendue (32) est établie au moins à la pression de commutation minimale (136) pour alimenter (156) la sortie d'air (34) et en réponse à celle-ci aussi bien la pression de commutation que la pression de commande d'étanchéité sont établies (148,140), dans lequel l'air comprimé est conduit dans le dispositif à commande par pression (28) de telle manière que la pression de commutation s'établisse à la pression de commutation minimale (148) en retard par rapport à la pression de commande d'étanchéité.

12. Procédé de modification de la pression des pneus selon la revendication 11, **caractérisé en ce qu'**un étranglement de la section transversale (46), en particulier une vanne papillon, et un réservoir sous pression (48) installé en aval de l'étranglement de section transversale (46) et relié à une entrée de commutation (42) de la soupape de commande (38) retardent ensemble (146) la montée en pression de la pression de commutation.

13. Procédé de modification de la pression des pneus selon la revendication 11 ou 12, **caractérisé en ce que** la sortie d'air (34) est détendue (172) par rapport à l'entrée d'air (32) au moyen d'un clapet anti-retour (44).

14. Procédé de modification de la pression des pneus selon l'une quelconque des revendications 11 à 13, **caractérisé en ce que** la sortie de commande d'étanchéité (36) est alimentée (138) au maximum avec un premier courant volumique via un autre clapet anti-retour (54) et est détendue de façon étranglée (182), via une liaison à section transversale réduite (52), au maximum avec un deuxième courant volumique réduit par rapport au premier courant volumique.

15. Procédé de modification de la pression des pneus selon l'une quelconque des revendications 11 à 14, **caractérisé en ce que** des moyens de diminution de la pression connectés en amont de la sortie d'air (34) fournissent (154) de l'air comprimé à la sortie d'air (34) avec une pression de sortie d'air réduite par rapport à la pression d'entrée d'air à l'entrée d'air (32).

16. Procédé de modification de la pression des pneus selon l'une quelconque des revendications 11 à 15, **caractérisé en ce qu'**une soupape de roue (22) montée en aval du passage rotatif (14), montée en amont du pneu (12) et constituée par une soupape à 2/2 voies avec une sortie de soupape de roue étranglée (120) et avec une entrée de soupape de roue (118) reliée à une entrée de commande (114) de la soupape de roue (22) occupe une position de passage (160) lorsque la pression à l'entrée de soupape de roue (118) est au moins aussi élevée qu'une pression minimale définie et occupe une position d'arrêt (176) lorsque la pression à l'entrée de soupape de roue (118) est inférieure à celle-ci ou à une autre pression minimale.
